(19) Europäisches Patentamt
European Patent Office
Office européen des brevets

(11) EP 2 198 952 A1

(12) **EUROPEAN PATENT APPLICATION**
published in accordance with Art. 153(4) EPC

(43) Date of publication:
**23.06.2010 Bulletin 2010/25**

(21) Application number: **08828825.3**

(22) Date of filing: **29.08.2008**

(51) Int Cl.:
***B01J 20/26*** *(2006.01)* ***B01J 13/02*** *(2006.01)*
***B01J 13/04*** *(2006.01)* ***B82B 1/00*** *(2006.01)*
***B82B 3/00*** *(2006.01)* ***C07K 17/02*** *(2006.01)*
***C08F 291/00*** *(2006.01)* ***G01N 30/88*** *(2006.01)*
***B01D 15/08*** *(2006.01)*

(86) International application number:
**PCT/JP2008/065526**

(87) International publication number:
**WO 2009/028661 (05.03.2009 Gazette 2009/10)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.08.2007 JP 2007224772**

(71) Applicants:
- **Keio University**
  **Tokyo 108-8345 (JP)**
- **Shiseido Company, Ltd.**
  **Chuo-ku**
  **Tokyo 104-8010 (JP)**

(72) Inventors:
- **UGAJIN, Hiroshi**
  **Yokohama-shi**
  **Kanagawa 223-8522 (JP)**
- **KAWAGUCHI, Haruma**
  **Yokohama-shi**
  **Kanagawa 223-8522 (JP)**
- **UENO, Norio**
  **Yokohama-shi**
  **Kanagawa 224-8558 (JP)**

(74) Representative: **Lippert, Stachow & Partner**
**Patentanwälte**
**Frankenforster Strasse 135-137**
**51427 Bergisch Gladbach (DE)**

# (54) MOLECULE RECOGNIZING MATERIAL AND PROCESS FOR PRODUCING THE MOLECULE RECOGNIZING MATERIAL

(57) The present invention provides a new molecular recognition material, wherein the control of morphology is possible and the selectivity and capture efficiency of the template molecule are excellent, and to provide a simple production method thereof. The molecular recognition material of the present invention is a core-shell particle, which has a shell layer on the core particle surface, and the material is **characterized in that** template molecules are imprinted on the above-described shell layer. And a production method of the molecular recognition material of the present invention comprising: (a) introducing an iniferter group on the core particle surface, (b) adsorbing the template molecule, after process (a), onto the core particle surface, and (c) forming the shell layer, after process (b), on the core particle surface.

FIG.1

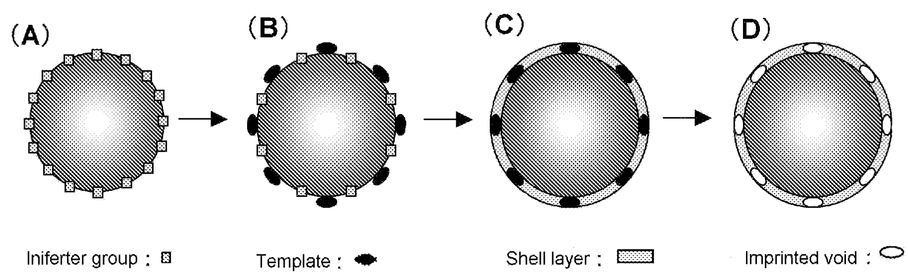


EP 2 198 952 A1

## Description

### RELATED APPLICATIONS

This application claims the priority of Japanese Patent Application No. 2007-224772 filed on August 30, 2007, which are incorporated herein by reference.

### FIELD OF THE INVENTION

The present invention relates to molecular recognition materials and the production method thereof, and in particular, relates to the improvement of recognition performance and capturing ability thereof.

### BACKGROUND OF THE INVENTION

The living body has a so-called molecular recognition capability, for example, the membrane of the lung can sort out only oxygen from the inhaled air. The attempt to create a material that is artificially imparted with an ability to uniquely recognize a molecule in such a way has been actively pursued. The application of molecular recognition material is anticipated, by using its various functions such as detection, selection, adsorption, or release of only a specific molecule, in wide-ranging fields including medical, cosmetic, and food fields, and its completion is strongly desired.

Especially in recent years, research for the creation of functional polymeric material having molecular recognition capability has been actively pursued. As one of its development methods, the "molecular imprinting method" is getting increased attention.

The molecular imprinting method is a very simple method in which a crosslinked polymer is prepared in the mixed presence of a molecular recognition target molecule (template molecule) and a monomer, and the information such as its shape and properties is stored in the polymer network after removing the template molecule. The thus obtained intelligent gel that can selectively adsorb (capture) the template molecule is expected to be used for highly selective and sensitive separation and in the application to sensor, catalyst, etc.

For example, Derek et al. prepared polyacrylamide hydrogel by using bovine hemoglobin (BHb) as the target molecule in the mixed presence of acrylamide (AAm) (non-patent literature 1). Here, PAAm, which is a nitrogen-containing acrylate polymer, is water-soluble, inexpensive, and easily prepared, and it is designed to have favorable structural parameters; thus it is reported to be suitable as the imprint base of a biomolecule. Subsequently, a hydrogel-based molecularly imprinted polymer (hydro MIP) having imprinted voids of BHb inside the gel was prepared by removing BHb from the above-described polyacrylamide hydrogel. It was shown that this had high selectivity for BHb compared with other structural analogs.

However, it was difficult to control the locations of to-be-formed imprinted voids in the bulk gel obtained by the conventional molecular imprinting method. In order to capture template molecules with the imprinted voids formed inside the gel of a three-dimensional network structure, it is essential for the template molecules to not only approach the gel but also enter into the inside. When a rather high-molecular-weight polymer such as a protein is used as a template molecule, it is not easy to let the protein penetrate into the gel. That is, in order to realize the more effective capture of template molecules, it is desirable that the imprinted voids are located at the outermost surface of the material or its vicinity in a controlled manner.

Thus, Wang et al. immobilized BHb on the pore wall (inner wall) of a nanoporous alumina, subsequently filled the pores with a mixture of AAm and N,N'-methylene-bis-(acrylamide) (MBAAm) and carried out polymerization. Then, they prepared a thin tubular polymer having imprinted voids only in the vicinity of the outermost surface by removing the alumina film, and they achieved the effective capturing of template molecules in high selectivity (non-patent literature 2).

Although the above-described technology made it possible to control the locations of imprinted voids, the shape and size of polymer particles had to be non-uniform because of the pores of the alumina.

Thus, the active research has been carried out in the past for the preparation of molecular recognition material. However, achieving both the control of particle shape and the formation of imprinted voids on the particle surface has remained to be issues to be solved; as a result, the industrial use has not yet been attained.

Non-patent literature 1: Derek et al., Anal. Chim. Acta, 542, 61-65 (2005)
Non-patent literature 2: Wang et al., Anal. Chem., 78, 317-320 (2006)

## DISCLOSURE OF THE INVENTION

## PROBLEM TO BE SOLVED BY THE INVENTION

The present invention was made under these circumstances, and an object is to provide a new molecular recognition material, wherein the control of morphology is possible and the selectivity and capture efficiency of the template molecule are excellent, and to provide a simple production method thereof.

## MEANS TO SOLVE THE PROBLEM

The present inventors have diligently studied to achieve the above-described object. As a result, the present inventors have found that a molecular recognition material having imprinted segments with high molecular recognition performance can be obtained by coating the surface of a base particle with a polymer shell layer and by providing, on the shell layer, an imprint that is complementary to the template molecule in the vicinity of the particle surface, thus leading to completion of the present invention.

That is, the molecular recognition material of the present invention is a core-shell particle, which has a shell layer on the core particle surface, and the material is **characterized in that** template molecules are imprinted on the above-described shell layer.

In addition, it is preferable in the present invention that the above-described core particles are monodisperse polymer fine particles.

In addition, it is preferable that the above-described template molecule is a protein.

In addition, the production method of the above-described molecular recognition material is characterized by containing the below-described processes:

(a) introducing an iniferter group on the core particle surface,
(b) adsorbing a template molecule, after process (a) onto the above-described core particle surface, and
(c) forming a shell layer, after process (b), on the above described core particle surface.

It is preferable that the above-described production method further contains (d) dissolving a template molecule, after process (c), from the above-described particle.

## EFFECT OF THE INVENTION

According to the present invention, molecular recognition materials with excellent selectivity and capture efficiency of various template molecules can easily be obtained. In addition, the molecular recognition materials of the present invention are applicable in various fields, with the use of adsorption and release functions of the molecule, for example, the purification of a specific substance, selective removal of unnecessary substance, and the application as a carrier for the retention and release of a useful substance. They can also be used in drug delivery, which was expected for molecular recognition material in the past.

## BRIEF DESCRIPTION OF THE DRAWINGS

Fig. 1 shows schematically the structure of molecular recognition material of the present invention.

Fig. 2 is a graph that shows a calibration curve of sodium N,N-diethyldithiocarbamate trihydrate (NaDC) solution.

Fig. 3 shows transmission electron microscope (TEM) pictures of monodisperse St-VBC-AAm copolymer fine particles (SVA particles) and SVA particles with introduced N,N-diethyldithiocarbamate groups (SVA-DC particles).

Fig. 4 is a graph that shows the amount of SVA-DC particle-adsorbed protein with respect to time.

Fig. 5 is a graph that shows the amount of SVA-DC particle-adsorbed protein for each protein concentration.

Fig. 6 shows TEM pictures of SVA-DC particles after the formation of the shell layer.

Fig. 7 is a graph that shows the electrophoretic mobility (EPM) and the particle size in water for molecular recognition particles.

Fig. 8 shows TEM pictures of SVA-DC particles and core-shell particles (SVA-A particles) obtained by polymerizing acrylamide (AAm) for 20 minutes on the surface of the SVA-DC particles, which were used as core particles.

Fig. 9 is a graph that shows the amount of adsorbed bovine hemoglobin (BHb) and the dissolved-out amount per SVA-A particle.

Fig. 10 is a graph that shows the protein capturing ability of the molecular recognition particles.

Fig. 11 is a graph that shows the amount of adsorbed BHb on the SVA-DC particles.

Fig. 12 is a graph that shows the results of the DSL measurement of the particle size in water and the results

of electrophoretic mobility measurement for SVA-DC particles, SVA-A particles, and control particles.

Fig. 13 is a graph that shows the amount of dissolved-out BHb from the SVA-A particles versus the amount of adsorbed BHb on the core particles.

Fig. 14 is a graph that shows the adsorption isotherm of BHb on the molecular recognition particles (MIP) and control particles.

Fig. 15 is a graph that shows the adsorption behavior of various proteins on the BHb-imprinted MIP.

Fig. 16 is a graph that shows a change in the amount of MIP-adsorbed protein with the use of the adsorption system solvent.

Fig. 17 is a graph that shows the adsorption behavior of various proteins, in the two-component protein systems, on the BHb-imprinted MIP.

Fig. 18 is a graph that shows the time variation of the adsorption behavior of various proteins, in the two-component protein systems, on the BHb-imprinted MIP.

## BEST MODE FOR CARRYING OUT THE INVENTION

Hereinafter, the present invention will be described in detail.

The molecular recognition material of the present invention can be prepared by carrying out the below-described treatments on the base particles. Fig. 1 shows schematically the particle structure at each stage.

(1) Introduction of an iniferter group on the particle surface (Fig. 1(A))
(2) Adsorption of a template molecule (target molecule) onto the particle surface (Fig. 1(B))
(3) Formation of a shell layer on the particle surface by living radical polymerization (Fig. 1(C))
(4) Formation of imprinted voids by the dissolution of the template molecule (Fig. 1(D))

Each step will be described later. However, the production method of the present invention can be concisely summarized as shown in Fig. 1. Living radical polymerization is carried out with the iniferter group, which is introduced on the base particle, as the initiation species, and a polymer is grafted on the particle surface. That is, the basic structure of the molecular recognition material of the present invention is a core-shell particle wherein a polymer (shell layer) is grafted on the outer layer of the base particle (core particle).

In the present invention, by adsorbing a template molecule, which is a recognition target, on the core particle prior to the grafting of the above-described shell layer, a particle wherein the template molecule is imprinted in the shell layer can be obtained. In addition, if the template molecule is dissolved out, as necessary, from the above-described shell layer, a molecular recognition material having an imprinted void, which is complementary to the template molecule, can be obtained.

Hereinafter, the structure of the molecular recognition material of the present invention will be explained in the order of the above-described treatment steps.

(1) Introduction of an iniferter group on the particle surface

Initially, the particles used as the base will be explained. As the base of the molecular recognition material of the present invention, there are no particular limitations so far as the introduction of the later-described iniferter group is possible. In particular, it is preferable to use monodisperse polymer fine particles wherein the size and shape of particles are nearly uniform. The monodisperse polymer fine particles can be obtained, by a publicly known synthesis method, by polymerizing a mixture of monomers in the presence of an initiator, for example, by a radical polymerization method such as soap-free emulsion polymerization, suspension polymerization, or seed emulsion polymerization. In the present invention, in particular, it is preferable to use monodisperse polymer fine particles by soap-free emulsion polymerization because the high-purity particles with controlled particle sizes can be obtained.

In the soap-free emulsion polymerization, an initiator having an ionic residue is used. This provides a charge on the particle surface; thus the particles are stabilized by the initiator instead of an emulsifier. There is another advantage in that the distribution of particle sizes can be narrowed by emulsion polymerization. As in the present invention, when the particle surface is functionalized by the introduction of a functional group or the surface is used as the reaction site, the preparation of particles having a clean surface is especially important.

In the soap-free emulsion polymerization, water is used as the solvent, and a water-insoluble monomer and a water-soluble initiator are used. The mechanism of the particle generation is that the water-soluble initiator initially reacts with the monomer slightly dissolved in water, and an active oligomer is formed in the aqueous phase. This oligomer becomes insoluble in water at a certain critical chain length and precipitates, and an oligomer micelle that forms the nucleus of a particle is formed. Even after precipitation, the oligomers keep growing; however, they coalesce and aggregate with each other and satisfy the characteristics as polymeric particles. The unreacted monomer that has been present as oil drops is distributed to oligomer micelles, and the polymerization site shifts from the aqueous phase to the particle nucleus and the reaction progresses. At the stage when the reaction sites have shifted to the precipitated

particles, the initiation reaction of the dissolved monomer and the initiator radical is not important. Even if the reaction takes place, the product is swiftly absorbed into the existing particle nuclei and the number of particles stays constant.

The surface structure of a fine particle is mainly controlled by the polymerization initiator and comonomers. The probability that the initiator residue is localized on the particle surface depends upon the size of the fine particle, the molecular weight of the polymer, and polarity of the initiator residue. In the soap-free emulsion copolymerization of a hydrophilic monomer and a hydrophobic monomer, the hydrophilic monomer units gather on the surface during polymerization, and the fine particle is stabilized by a hydrated structure formed on the surface.

There are no limitations on the monomers that form monodisperse polymer fine particles. However, it is preferable to select one or more monomers having a substituent at a side chain and/or terminal by considering the introduction of an iniferter group on the fine particle surface.

Examples of monomers that constitute monodisperse polymer fine particles include radically polymerizable monomers such as styrene, $\alpha$-methylstyrene, dimethylstyrene, monochlorostyrene, dichlorostyrene, 4-vinylbenzyl chloride, ethylene, 1-pentene, 3-methyl-1-butene, 4-methyl-1-pentene, 1-hexene, vinylcyclohexane, cyclobutene, cyclopentene, cyclohexene, acrylamide, N,N-dimethylacrylamide, N,N-diethylacrylamide, N,N-dimethylaminopropylacrylamide, N-isopropylacrylamide, N-hydroxymethylacrylamide, N-isobutoxymethylacrylamide, N-tert-butylacrylamide, N-hydroxymethylacrylamide, N-isobutoxymethylacrylamide, 2-acrylamido-2-methylpropanesulfonic acid, methacrylamide, acryloylmorpholine, acrylonitrile, vinyl acetate, vinylpyrrolidone, N-vinylcarbazole, vinylpyridine; acrylic acid and acrylic acid ester compounds such as acrylic acid, methyl acrylate, ethyl acrylate, n-propyl acrylate, isopropyl acrylate, n-butyl acrylate, t-butyl acrylate, n-hexyl acrylate, cyclopentyl acrylate, cyclohexyl acrylate, phenyl acrylate, 2-pyridyl acrylate, 2-ethylhexyl acrylate, 2-hydroxypropyl acrylate, 2-methoxyethyl acrylate, 2-ethoxyethyl acrylate, n-lauryl acrylate, n-dodecyl acrylate, n-stearyl acrylate, benzyl acrylate, tetrahydrofurfuryl acrylate, glycidyl acrylate, allyl acrylate, ethylcarbinol acrylate, dimethylaminoacrylate, trimethylolpropane triacrylate, 1,4-butanediol diacrylate, 1,6-hexanediol diacrylate, neopentyl glycol diacrylate, pentaerythritol triacrylate, and sodium acrylate; and methacrylic acid and methacrylic acid ester compounds such as methacrylic acid, methyl methacrylate, ethyl methacrylate, n-propyl methacrylate, isopropyl methacrylate, n-butyl methacrylate, t-butyl methacrylate, n-hexyl methacrylate, cyclopentyl methacrylate, cyclohexyl methacrylate, phenyl methacrylate, 2-pyridyl methacrylate, 2-ethylhexyl methacrylate, 2-hydroxypropyl methacrylate, 2-methoxyethyl methacrylate, 2-ethoxyethyl methacrylate, n-lauryl methacrylate, n-dodecyl methacrylate, n-stearyl methacrylate, benzyl methacrylate, tetrahydrofurfuryl methacrylate, glycidyl methacrylate, allyl methacrylate, ethylcarbinol methacrylate, dimethylaminomethacrylate, trimethylolpropane trimethacrylate, 1,4-butanediol dimethacrylate, 1,6-hexanediol dimethacrylate, neopentylglycol dimethacrylate, pentaerythritol trimethacrylate, glycerol methacrylate, and sodium methacrylate.

Examples of especially preferable monomers include styrene, 4-vinylbenzyl chloride (VBC), acrylamide, acrylic acid, and glycerol methacrylate. As a monomer that has a substituent at a side chain and/or terminal and for the introduction of an iniferter group on the fine particle surface, 4-vinylbenzyl chloride (VBC), glycerol methacrylate, etc. are preferable.

There are no particular limitations on the polymerization initiator so far as the radical polymerization can be initiated in the above-described particle synthesis method. Examples include peroxides such as benzoyl peroxide, azo compounds such as azobisisobutyronitrile (AIBN) and dimethyl 2,2'-azobis(isobutyrate), and persulfate polymerization initiators such as potassium persulfate and ammonium persulfate. On the other hand, the polymerization can also be carried out by photochemical reaction, irradiation, etc. instead of these polymerization initiators.

The polymerization temperature can be set based on the polymerization initiation temperature of the used initiator. For example, it is normally about 70 ˚C in the case of a peroxide polymerization initiator.

The polymerization time is not limited in particular; normally, it can be suitably adjusted in the approximate range of 2 to 24 hours in accordance with the size of particles to be formed.

In the present invention, the monodisperse, polymer fine particles in which styrene (St), 4-vinylbenzyl chloride (VBC), and acrylamide (AAm) are used as the monomers can be used preferably. The production example of the above-described particles will be described below; however, the present invention is not limited by this example.

(Production example) monodisperse St-VBC-AAm copolymer fine particles (SVA particles)

Into a 300 mL four-neck round bottom flask with a stirring rod, an Allihn condenser, a serum rubber, and a stirring seal, 2.85 g of styrene (St), 0.10 g of 4-vinylbenzyl chloride (VBC), and 0.05 g of acrylamide (AAm) as the monomers, and 75 g of water as the solvent were placed, and the stirring was carried out at 300 rpm at 70 ˚C. After the nitrogen replacement was carried out for 30 minutes in a constant temperature bath set at a predefined temperature, 0.1 g of potassium persulfate (KPS), as the initiator, dissolved in 10 g of water was added into the system with a syringe. Then, further nitrogen replacement was carried out for 30 minutes, and the polymerization reaction was carried out for 24 hours. The latex dispersion solution after the completion of polymerization was centrifuged under the conditions of 13500 rpm, 12 minutes, and 15 ˚C. After the supernatant was removed by decantation, the in-water redispersion of the lower layer particles was repeated four times for purification, and a particle dispersion solution was obtained.

In the above-described production example, the soap-free emulsion polymerization was carried out at 70 ˚C

with the use of potassium persulfate as the initiator. Because the acrylamide monomer unit and the charged terminal of the initiator are hydrophilic, they do not penetrate inside the particle during the growth process and stay on the particle surface. Thus, the obtained fine particles (SVA particles) have an initiator-derived negative charge on the surface, and the dispersion stability is attained by electrostatic repulsion. In addition, because the hydrophilic acrylamide monomer units are present on the particle surface, it is expected that the exposure of styrene-derived hydrophobic sites on the particle surface is reduced, and they can be reaction scaffolds during the introduction of the shell layer.

Including the above-described production example, the morphology and size of base particles, used in the present invention, can be suitably adjusted during the particle production depending on the intended use of the molecular recognition material and the properties of the recognition target molecule. The preferable base particles of the present invention are nearly uniform spherical particles with the particle size of 0.05 to 2 $\mu$m, and more preferably those with the particle size of 0.1 to 0.5 $\mu$m.

Subsequently, an iniferter group is introduced on the surface of the thus obtained particle. The iniferter was proposed by Otsu et al. in 1982, and it is a radical initiator with the ability of chain transfer (CT) to the initiator and/or the ability of primary radical termination (PRT). The iniferter functions not only as such a living radical polymerization initiator but also as a suppressor, polymerization terminator, and chain transfer agent. With the use of the iniferter, it is possible to control graft polymerization in the below-described shell layer formation.

That is, the introduction of an iniferter group means the introduction of a functional group having the above-described iniferter functions, namely, the introduction of initiation species of shell layer formation.

As iniferter groups that function as initiation species of living radical polymerization, there are functional groups that generate a radical by light, by heat, or by the addition of a metal complex.

Examples of functional groups (photoiniferters) that become a radical by ultraviolet light include N,N-dimethyldithiocarbamate group, N,N-dihydroxyethyldithiocarbamate group, N,N-dimethylphenyldithiocarbamate group, N-methyl-N-ethyldithiocarbamate group, N-methyl-N-hydroxyethyldithiocarbamate group, N-methyl-N-methylphenyldithiocarbamate group, N-ethyl-N-hydroxyethyldithiocarbamate group, N-ethyl-methylphenyldithiocarbamate group, and N-hydroxyethyl-N-methylphenyldithiocarbamate group.

Examples of functional groups (thermal iniferters) that become a radical by heat include 1,1,2,2-tetraphenylethane derivatives such as 1-methyl-1,1,2,2-tetraphenylethyl group, 1-ethyl-1,1,2,2-tetraphenylethyl group, 1-hydroxy-1,1,2,2-tetraphenylethyl group, 1-methoxy-1,1,2,2-tetraphenylethyl group, 1-ethoxy-1,1,2,2-tetraphenylethyl group, 1-benzyloxy-1,1,2,2-tetraphenylethyl group, 1-cyano-1,1,2,2-tetraphenylethyl group, 1-carboxyethyl-1,1,2,2-tetraphenylethyl group, and 1-trimethylsilyloxy-1,1,2,2-tetraphenylethyl group.

In addition, the examples of functional groups that form a radical, by the addition of a metal complex, as the initiation species of atom transfer radical polymerization (ATRP) include halogenated alkyl derivatives such as haloalkanes, haloketones, halonitriles, haloesters, and haloalkyl benzenes.

In the present invention, any type of iniferter group can be introduced. However, the application of a photoiniferter group is especially preferable because a polymerization reaction can be carried out at a low temperature. In the case of a thermal iniferter group, the polymerization is initiated by heating. Therefore, heat denaturation may be induced when a protein is used as the template molecule.

The introduction of the above-described iniferter group to the particle surface is carried out by the reaction, in an aqueous solvent, of the substituent on the particle and an iniferter reagent having an iniferter group under stirring. By the removal of the solvent after reaction, a particle having an iniferter group on the surface can be obtained.

Examples of iniferter reagents include carbamate compounds, aminoxyl compounds, selenium compounds, diselenide compounds, and diphenylethane derivatives.

Examples of carbamate compounds include N,N-diethyldithiocarbamate, n-butyl-N,N-dimethyldithiocarbamate, benzyldithiocarbamate, benzyl-N,N-dimethyldithiocarbamate, benzyl-N,N-diethyldithiocarbamate, thiuram monosulfide, N,N'-dimethylthiuram monosulfide, N,N,N',N'-tetramethylthiuram monosulfide, N,N'-diethylthiuram monosulfide, N,N,N',N'-tetraethylthiuram monosulfide, thiuram disulfide, N,N-dimethylthiuram disulfide, N,N,N',N'-tetramethylthiuram disulfide, N,N'-diethylthiuram disulfide, N,N'-dimethylthiuram tetrasulfide, N,N,N',N'-tetraethylthiuram disulfide, p-xylenebis(dithiocarbamate), p-xylenebis(N,N-dimethyldithiocarbamate), p-xylenebis(N,N-diethyldithiocarbamate), 1,2-bis(N,N-diethyldithiocarbamyl) ethane, 1,2-bis(N,N-dimethyldithiocarbamyl)ethane, 1,2,3-tris(N,N-dimethyldithiocarbamyl)propane, 1,2,4,5-tetrakis(N,N-diethyldithiocarbamylmethyl)benzene, 1-(N,N-diethyldithiocarbamyl)ethyl acetate, or their salts, and hydrates thereof.

As the above-described compound, the polyethylene oxide derivative having a dimethyldithiocarbamate group (POE2K), represented by the below-described structural formula, can also be used.

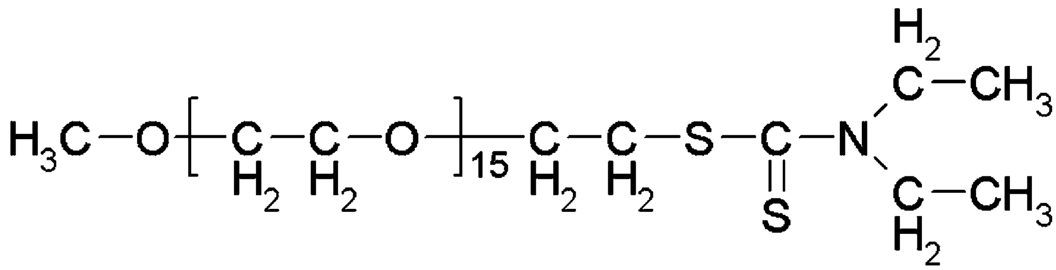

Examples of aminoxyl compounds include ((2',2',6,6'-tetramethyl-1'-piperidinyloxy)methyl)benzene, 1-phenyl-1-(2',2',6',6'-tetramethyl-1'-piperidinyloxy)ethane, 1-(4'-bromophenyl)-1-(2",2",6",6"-tetramethyl-1'-piperidinyloxy) ethane, 1-naphthyl-1-(2',2',6',6'-tetramethyl-1"-piperidinyloxy)ethane, 1-phenyl-1-(2',2',6',6'-tetramethyl-1'-piperidinyloxy)propane, 1-(benzyloxy)-2-phenyl-2-(2\2\6\6'-tetramethyl-1'-piperidinyloxy)ethane, 1-hydroxy-2-phenyl-2-(2',2',6',6'-tetramethyl-1'-piperidinyloxy)ethane, phenyl-4-cyano-4-(2',2',6',6' -tetramethyl-1'-piperidinyloxy)pentanoate, pentafluorophenyl-4-cyano-4-(2',2',6',6'-tetramethyl-1'-piperidinyloxy)pentanoate, 3-phenyl-1-(2',2',6',6'-tetramethyl-1'-piperidinyloxy)propane, 1-((2',2',6',6'-tetramethyl-1'-piperidinyloxy)methyl)-4-(trifluoromethyl)benzene, or their salts, and hydrates thereof.

Examples of selenium compounds include benzyl phenyl selenide, p-methylbenzyl phenyl selenide, p-ethylbenzyl phenyl selenide, benzyl tolyl selenide, xylenyldiphenyl diselenide, and xylenylditolyl diselenide.

Examples of diselenide compounds include diphenyl diselenide, ditolyl diselenide, di-(p-cumenyl) diselenide, di-(1-naphthyl) diselenide, di-(2-naphthyl) diselenide, di-(p-t-butylphenyl) diselenide, or their salts, and hydrates thereof.

Examples of diphenylethane derivatives include diethyl 1,2-dicyano-1,2-diphenyl succinate, 3,4-dimethyl-3,4-diphenylhexane, 3,4-diethyl-3,4-diphenylhexane, 4,5-dimethyl-4,5-diphenyloctane, 2,3-dimethyl-2,3-diphenylbutane, 2,2,3,3-tetraphenylbutane, 1,2-dicyano-1,1,2,2-tetraphenylethane, 3,3,4,4-tetraphenylhexane, or their salts, and hydrates thereof.

In the present invention, it is especially preferable to introduce an N,N-diethyldithiocarbamate group on the particle with the use of N,N-diethyldithiocarbamate or PEO2K.

For example, when the photoiniferter N,N-diethyldithiocarbamate group is introduced on the SVA particle of the above-described production example, the photoiniferter group is introduced on the particle surface by the reaction of the chloromethyl group of the VBC residue, which is present on the SVA particle surface, and the iniferter reagent.

Specifically, sodium N,N-diethyldithiocarbamate trihydrate (NaDC), as the iniferter reagent, is allowed to act on the SVA particles; thus the N,N-diethyldithiocarbamate group can be introduced on the particle surface via the below-described substitution reaction.

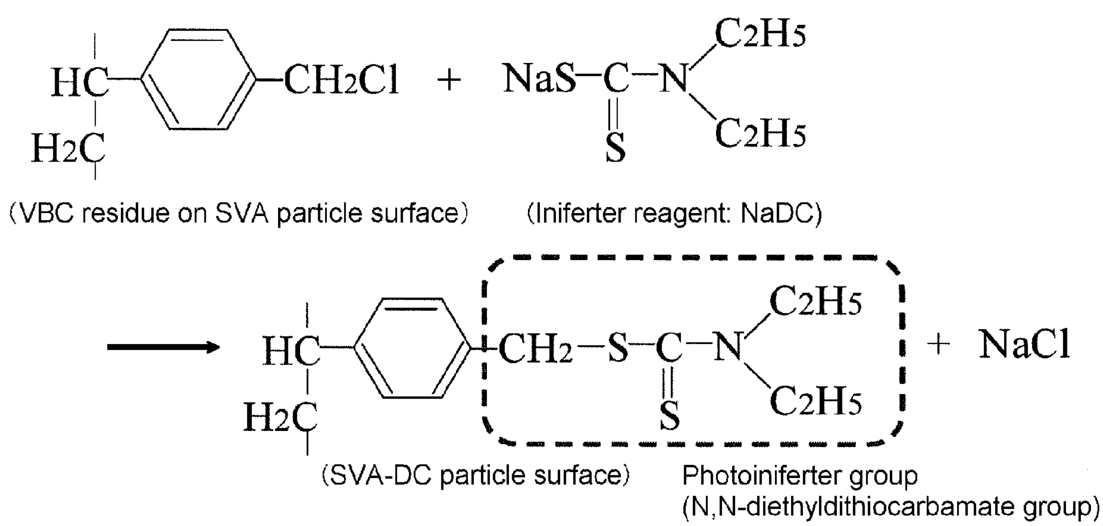

(2) Adsorption of template molecule on the particle surface

Subsequently, a recognition target molecule, namely, a template molecule is adsorbed on the above-described particle wherein an iniferter group has been introduced.

As the template molecule, a protein is preferable; however, other natural or synthetic compounds, viruses, etc. may be acceptable.

The size of the template molecule is preferably about 1 to 20 nm, as a single body, though it depends upon the size and the shape of base particles to be adsorbed on. In particular, a protein with the molecular weight of 500 to 1 million can be preferably used.

If the template molecule is too large, the adsorption of the template molecule on the base particle or the subsequent formation of a shell layer may not be satisfactory. If the template molecule is too small, the shell layer may not be sufficiently thick and the formed imprinted voids may collapse.

The adsorption of a template molecule to the particle having the introduced iniferter group can be carried out by a publicly known method in accordance with the properties of the base particles and the used template molecule. Generally, the particles and the template molecule are mixed in an appropriate solvent, and the template molecule is allowed to be adsorbed on the particle surface by intermolecular forces and electrostatic interaction to obtain template-adsorbed particles.

For example, when a protein is adsorbed on the monodisperse polymer fine particle, if the surface potential of the polymer fine particle is negative because of the effect of the polymerization initiator, the protein can be adsorbed on the particle by electrostatic interaction by adjusting the solvent to a pH where the molecule is positively charged based on the isoelectric point of the protein molecule.

Especially when a protein template molecule is used, the protein may not completely dissolve into the solvent, and the undissolved molecules may cause sedimentation. In such a case, it is preferable to beforehand separate the supernatant from the sediment by centrifugation etc. and to use this supernatant for mixing with the particles.

The concentration of the template molecule that is adsorbed on the particle and the treatment time can be suitably set depending upon the kinds and sizes of particles and template molecules or the amount to be treated. Because the amount of adsorbed template molecules in the present process is one of the conditions that determine the number of imprinted segments for molecular recognition, the functional control of the molecular recognition material is considered to be possible by the adjustment of the adsorbed amount.

On the other hand, the amount of particle-adsorbed template molecules reaches saturation at some level. Even if the excess high-concentration template molecule is allowed to act, the adsorbed amount is considered to increase not more than a certain level. Similarly, it is necessary to consider that even if the adsorption treatment time is excessively lengthened, the adsorption more than the saturation amount cannot be attained.

Normally, If the concentration of the template molecule is at the level that can coat 10 to 50% of the surface of a particle, a sufficiently high functional molecular recognition material can be produced. The adsorption treatment can be achieved at room temperature in the range of 15 minutes to 24 hours.

(3) Coating of particle surface with a shell layer

Living radical polymerization is induced by using the particle with the adsorbed template molecule as the core particle and by using the previously-introduced iniferter group as the initiation species. Thus, the polymerizable monomers that will constitute the shell layer are grafted on the particle surface. The formation of a shell layer on the surface of the core particle can be carried out according to a publicly known iniferter method. Specifically, the core particles, a polymerizable monomer, and a crosslinking agent are mixed in a solvent, and the living radical polymerization is initiated in accordance with the kind of initiation species. That is, the polymerization is initiated by the irradiation of ultraviolet light (UV) if a photoiniferter group is introduced on the core particle, by heating if a thermal iniferter group is used, and by the addition of a metal complex if an iniferter group wherein a radical is formed by the addition of a metal complex is used.

Any polymerizable monomer that is applicable to particle-surface graft polymerization can be used without difficulty so far as a polymer can be formed by radical polymerization.

Examples of such monomers include radically polymerizable monomers such as styrene, $\alpha$-methylstyrene, dimethylstyrene, monochlorostyrene, dichlorostyrene, ethylene, propylene, chloroethylene, 1,1-dichloroethylene, 1-butene, isobutene, 1-pentene, 3-methyl-1-butene, 4-methyl-1-pentene, 1-hexene, vinylcyclohexane, cyclobutene, cyclopentene, cyclohexene, acrylamide, N,N-dimethylacrylamide, N,N-diethylacrylamide, N,N-dimethylaminopropylacrylamide, N-isopropylacrylamide, N-butoxyacrylamide, N-tert-butylacrylamide, N-hydroxymethylacrylamide, N-isobutoxymethylacrylamide, 2-acrylamido-2-methylpropanesulfonic acid, methacrylamide, acryloylmorpholine, acrylonitrile, vinyl acetate, vinylpyrrolidone, N-vinylcarbazole, vinylpyridine; acrylic acid and acrylic acid ester compounds such as acrylic acid, methyl acrylate, ethyl acrylate, n-propyl acrylate, isopropyl acrylate, n-butyl acrylate, t-butyl acrylate, n-hexyl acrylate, cyclopentyl acrylate, cyclohexyl acrylate, phenyl acrylate, 2-pyridyl acrylate, 2-ethylhexyl acrylate, 2-hydroxypropyl acrylate, 2-methoxyethyl acrylate, 2-ethoxyethyl acrylate, n-lauryl acrylate, n-dodecyl acrylate, n-stearyl

acrylate, benzyl acrylate, tetrahydrofurfuryl acrylate, glycidyl acrylate, allyl acrylate, ethylcarbinol acrylate, dimethylaminoacrylate, trimethylolpropane triacrylate, 1,4-butanediol diacrylate, 1,6-hexanediol diacrylate, neopentyl glycol diacrylate, pentaerythritol triacrylate, and sodium acrylate; and methacrylic acid and methacrylic acid ester compounds such as methacrylic acid, methyl methacrylate, ethyl methacrylate, n-propyl methacrylate, isopropyl methacrylate, n-butyl methacrylate, t-butyl methacrylate, n-hexyl methacrylate, cyclopentyl methacrylate, cyclohexyl methacrylate, phenyl methacrylate, 2-pyridyl methacrylate, 2-ethylhexyl methacrylate, 2-hydroxypropyl methacrylate, 2-methoxyethyl methacrylate, 2-ethoxyethyl methacrylate, n-lauryl methacrylate, n-dodecyl methacrylate, n-stearyl methacrylate, benzyl methacrylate, tetrahydrofurfuryl methacrylate, glycidyl methacrylate, allyl methacrylate, ethylcarbinol methacrylate, dimethylaminomethacrylate, trimethylolpropane trimethacrylate, 1,4-butanediol dimethacrylate, 1,6-hexanediol dimethacrylate, neopentylglycol dimethacrylate, pentaerythritol trimethacrylate, and sodium methacrylate. The above-described monomers may be used either alone or in combination of two or more. In the present invention, acrylic acid and acrylamide can be used preferably.

As the crosslinking agent, a polyfunctional compound with two or more functional groups that can form a covalent bond by reacting with the reactive functional group of the monomer can be used. Specific examples include bisacrylamides such as N,N'-methylenebisacrylamide and N,N'-methylenebismethacrylamide; long-chain diacrylates such as ethylene glycol di(meta)acrylate and polyethylene glycol di(meta)acrylate; and divinylbenzene, and N,N'-methylenebisacrylamide is especially preferable.

The polymerization solvent is not limited in particular so far as the shell layer formation by graft polymerization is not disturbed. For example, aliphatic hydrocarbons such as n-hexane and n-heptane, alicyclic hydrocarbons such as cyclohexane and cyclopentane, aromatic hydrocarbons such as benzene and toluene, and ether compounds such as tetrahydrofuran can be used.

The polymerization temperature can be suitably selected depending on the initiator of radical polymerization. If the initiation species of living radical polymerization is a photoiniferter group, a radical is generated by ultraviolet irradiation; thus the polymerization temperature is not limited in particular. In the case that an iniferter group wherein a radical is formed by the addition of a metal complex is used as the initiation species, the polymerization temperature is also not limited in particular. In the case that the initiation species is a thermal iniferter group, the polymerization is carried out at 50 to 150 ˚C because a radical is generated by heat.

The polymerization is stopped by the termination of ultraviolet irradiation if the radical formation is by ultraviolet irradiation. If the radical formation is by heating, the polymerization is stopped by the termination of heating. If the radical formation is by the addition of a metal complex, the polymerization is swiftly stopped by the inactivation such as the removal of a metal complex or the inclusion of oxygen. In addition, the polymerization is also stopped when the entire monomers are consumed by polymerization.

The purification of the formed core-shell particles can be carried out according to general polymer purification methods such as the precipitation with a poor solvent, dialysis, and the distillation of the polymerization solvent.

The polymer formation by living radical polymerization is different from that by radical polymerization, and the termination does not take place by recombination or disproportionation. Because the polymer formation uniformly progresses until the above-described termination treatment is carried out, the degree of polymerization of each initiation species is approximately the same. Therefore, according to the present invention, a shell layer with a nearly uniform thickness can be formed on the particle surface.

In the present invention, it is possible to control the degree of polymerization, namely, the thickness of the shell layer by exploiting the nature of such living radical polymerization, namely, by suitably adjusting the polymerization time or the concentration of the monomer and crosslinking agent. In addition, the degree of polymerization can also be controlled by adjusting the number of initiation species of living graft polymerization by the amount of the iniferter group introduced on the particle.

In the present invention, it is preferable to control the thickness of the shell layer depending upon the thickness of a template molecule adsorbed on the core particle so that the template-imprinted segments are located in the vicinity of the particle surface.

(4) Formation of imprinted voids by the dissolution of template molecules

In the above-described core-shell particle, template molecules are dispersed, in a buried state, in the shell layer of the particle surface. In the present invention, the particle having imprinted voids, on the surface, wherein the template molecular structure is mimicked can be obtained by dissolving out these template molecules from the shell layer. The molecular recognition material of the present invention is intended to include not only the particle having a template molecule in the imprinted section but also the particle having an imprinted void from which the template molecule has been removed. Therefore, the dissolution of template molecule from the shell layer can be carried out as necessary. In addition, a compatible molecule may be allowed to be retained again in the imprinted void after the template molecule is once dissolved out and the particles are washed.

The template molecule in the shell layer can be removed by dissolving out the formed core-shell particle with an appropriate solvent. The solvent used for dissolution can be suitably selected depending upon the type of to-be-dissolved template molecule so far as the particle is not damaged. For example, when a protein is the template molecule, an acetic acid solution containing sodium dodecyl sulfate (SDS) can be preferably used as the solvent.
The molecular recognition material, obtainable by the above process, of the present invention can be applied to any field, wherein the application of molecular recognition materials is envisioned, such as cosmetics, pharmaceuticals, food, etc.
The particle morphology of the molecular recognition material of the present invention may be arbitrary so far as the effect is not undermined, and any shape and particle size that are in accordance with the intended use can be taken.
The above-described molecular recognition material can be used, for example, as an HPLC column packing material that can be used for high-precision separation of a specific molecule. In addition, the application as a chemical peeling agent is possible by blending the fine particles, wherein a specific molecule such as an enzyme is retained in the imprinted void, into cosmetics etc. Furthermore, the molecular recognition material can be blended into skin cosmetics as the powder that selectively absorbs unnecessary substance. In addition to the above applications wherein the molecular recognition material of the present invention is used as an ingredient of various products, the application in the raw material production, such as the separation and purification of expensive pharmaceutical raw materials, can be expected.
Hereinafter, the present invention will be described with reference to examples. However, the present invention is not limited by these examples.

## EXAMPLES

### Example 1

Initially, monodisperse St-VBC-AAm copolymer fine particles (SVA particles) were obtained by the below-described method.

<u>Production method of SPA particles</u>

Into a 300 mL four-neck round bottom flask with a stirring rod, an Allihn condenser, a serum rubber, and a stirring seal, 2.85 g of styrene (St), 0.10 g of 4-vinylbenzyl chloride (VBC), and 0.05 g of acrylamide (AAm) as the monomers, and 75 g of water as the solvent were placed, and the stirring was carried out at 300 rpm at 70 ˚C. After the nitrogen replacement was carried out for 30 minutes in a constant temperature bath set at a predefined temperature, 0.1 g of potassium persulfate (KPS), as the initiator, dissolved in 10 g of water was added into the system with a syringe. Then, further nitrogen replacement was carried out for 30 minutes, and the polymerization reaction was carried out for 24 hours. The latex dispersion solution after the completion of polymerization was centrifuged under the conditions of 13500 rpm, 12 minutes, and 15 ˚C. After the supernatant was removed by decantation, the in-water redispersion of the lower layer particles was repeated four times for purification, and a particle dispersion solution was obtained.
The conversion rate of the above-described soap-free emulsion copolymerization was determined to be 83.5% by a gravimetric method.
Subsequently, an iniferter group was introduced onto the surface of the above-obtained SVA particle by the below-described method.

<u>Introduction method of an iniferter group</u>

Into a 300 mL three-neck round bottom flask, 2.0 g (as solid) of SVA particles was placed, and distilled water was added so that the total amount will be 70 g. To this reaction vessel, a stirring rod and a stirring seal were installed, and the stirring was carried out at 200 rpm under cooling with ice. Into the system, 0.74 g of sodium N,N-diethyldithiocarbamate trihydrate (NaDC) dissolved in 30 g of water was added little by little. Subsequently, the reaction was carried out at room temperature overnight. Then, the purification by centrifugation was repeated four times under the conditions of 13500 rpm, 12 minutes, and 15 ˚C, and SVA-DC particles having an N,N-diethyldithiocarbamate group as the iniferter group were obtained.
The morphology of the above-obtained SVA particles having the introduced iniferter group was observed by the following methods.

<Quantification of iniferter group>

The absorption in the ultraviolet region due to C=S bond ($n \rightarrow \pi^*$) of NaDC is in the vicinity of 352 (nm), a dilute

solution obeys the Lambert-Beer law, and the absorbance increased in proportion to the concentration. Thus, after the modification reaction of SVA particles with NaDC, the amount of the iniferter introduced to the particle was measured from the absorbance at 352 (nm) for the supernatant solutions (FT, W1 to W3) that were obtained in the purification by centrifugation.

For the measurement of absorbance, the baseline was drawn with ultrapure water, and a sample was placed in a spectrophotometer (BioSpec-1600 Series, manufactured by Shimadzu Corporation) and measured at 20 ˚C. The sum of absorbances (FT + W1 + W2 + W3) for the supernatants obtained from one sample was determined. The amount of NaDC that remained in the supernatant solutions was determined from the calibration curve obtained from the mother liquor (Fig. 2). In addition, the amount of particle-immobilized iniferter was calculated by subtracting the remained amount from the loaded amount.

The amount of the iniferter on the particle surface was determined to be 2.6 units/$nm^2$ from the above supernatant quantification. Thus, it was shown that a sufficient amount of the functional group could be introduced on the SVA particles by the introduction of the above-described iniferter group.

<Morphology of particles>

When an electron beam is irradiated on an uneven sample, in the transmission electron microscopic (TEM) measurement, the absorption takes place depending upon the sample thickness to obtain a grayscale image. If the observation is carried out by inserting an objective aperture at the position of focus, among the electrons scattered by the sample, the electrons scattered at more then a certain angle are shielded. The thus generated contrast differs depending upon the sample thickness.

A sample was placed on the support film, which was prepared by applying a collodion film on the Cu TEM grid. Collodion is an amyl acetate solution of nitrocellulose with a low degree of nitration (11 to 12%). The collodion solution is a 1.5 to 2% amyl acetate solution. When a drop of collodion solution is placed on the water surface, the droplet will spread on the water surface because of the surface tension of water. When the solvent is evaporated, a thin film of about 100 Å is formed on the water surface. The thickness of collodion film can be controlled by water temperature; therefore, a film was prepared with the use of the water surface of about 40 ˚C. This was applied on the copper mesh and dried to obtain a support film.

Respective prepared latex particles were diluted to an appropriate concentration and deposited on the collodion film that is supported on the metal mesh. This was photographed with a TEM (JSM-5200, manufactured by JEOL Ltd.) at an appropriate magnification, and the particle morphology was observed. The images of SVA (Fig. 3(A) and SVA-DC (Fig. 3(B)) photographed with a TEM are shown in Fig. 3.

The particle diameters in this image were measured with a vernier caliper, and the number average particle diameter ($D_n$) and the weight average particle diameter ($D_w$) of the dry particles were calculated according to the following equation. In addition, the monodispersity of particle diameters was evaluated by the value of $D_w/D_n$.

$$D_n = \Sigma N_i D_i / N_i$$

$$D_w = \Sigma N_i D_i^4 / N_i D_i^3$$

*$N_i$: number of particles with the diameter $D_i$

When an electron beam collides with a material, scattering takes place. The scattered electrons are cut off by the aperture of objective lens and they do not reach the image plane, causing a dark contrast. The degree of this scattering is proportional to the weight/thickness. When an amorphous sample is dispersed on the collodion support film, this contrast due to scattering becomes dominant. Thus, the black shades in Fig. 3 are the core sections where styrene is the main component.

From Fig. 3, the number average particle diameter ($D_n$) of the dry SVA particles is 334.2 (nm), the weight average particle diameter ($D_w$) is 334.6(nm), and the monodispersity ($D_w/D_n$) is 1.001, and it is confirmed that monodisperse core particles have been prepared.

Generally, if a particle suspension is dried on the flat and smooth base, the particles move because of the flow of medium and accumulate on the base where the evaporation rate is high. When the interaction between the particles and the base is weak, an attractive force among particles works because of the surface tension of the medium and the particles accumulate locally. As a result, the particles in each sample of Fig. 3 are considered to be closely-spaced.

As is clear from Fig. 3 and the measured values, the SVA particles were monodisperse particles with uniform

shape and size. It was also confirmed that uniform particles are maintained even after the introduction of an iniferter group on the particle surface.

<Measurement of particle diameters in water>

The dynamic light scattering method is a method to determine particle diameters by measuring the fluctuations of scattered light by fine particle dispersion solution. Dispersed fine particles in a suspension or solution are constantly in a micro-Brownian motion. The larger the particle, the slower the movement, and the smaller the particle the faster the movement. When a laser light (He-Ne laser: 632.8nm) is irradiated to a sufficiently dilute latex where the interparticle interaction is negligible, a light is scattered by the particles. However, the wavelength of the scattered light fluctuates with time because of the micro-Brownian motion of particles themselves. This wavelength fluctuation of light corresponds to the particle size of respective particles. The information of the particle size and its distribution can be obtained by observing this fluctuation with a pinhole photon detection apparatus and analyzing the autocorrelation function by the photon correlation method. The particle size obtained by this method is a hydrodynamic radius (d) and calculated with the Stokes-Einstein equation.

$$d = kT/(6\pi\eta D)$$

D: diffusion coefficient, k: Boltzmann constant, T: absolute temperature

In the actual measurement, a small amount of respective formed particles are taken, diluted to an appropriate concentration with distilled water, put into a completely transparent cell, and the particle size of latex particles in water was measured at an appropriate temperature with the use of PCS (Photon Correlation Spectroscopy: PAR III, manufactured by Otsuka Electronics Co., Ltd.). In addition, the degree of dispersion $D_w/D_n$, which is the indicator of monodispersity, was calculated.

The hydrodynamic radius of the SVA particle measured by the above-described dynamic light scattering method was 370 (nm), and the degree of dispersion was 1.014.

From the above measurement results, for the molecular recognition material of the present invention, the monodisperse particles prepared by soap-free emulsion polymerization are considered to be preferable as the base particles in morphology and for the introduction of an iniferter group.

Subsequently, the template molecule (protein) was adsorbed on the SVA-DC particle prepared by the above-described production method, and its adsorption state was analyzed. At first, the adsorption method of protein will be explained.

<u>Adsorption method of protein</u>

Into a 2 mL microtube, 2.5 mg (as solid) of the SVA-DC particles prepared by the above-described method was placed, and the buffer replacement was repeated three times with 10 mM sodium phosphate buffer solution (SPB) (pH 7.0) to remove the supernatant completely. Then, 200 μL of 500 ppm bovine hemoglobin (BHb) solution was added, the particles and the protein were allowed to interact, while being shaken with a thermomixer, at 37 ˚C for 1 hour.

After the particles and the protein were allowed to interact, 180 μL of the supernatant was removed by centrifugation (non-incorporated fraction: FT), and further centrifugation was carried out by adding 180 μL of the same buffer to wash three times (washing fractions: W1 to W3).

<Determination of the amount of adsorbed protein>

The amount of adsorbed protein was quantified by the below-described two determination methods.

The one method is the determination of adsorbed protein by the bicinchoninic acid (BCA) method.

Into a 96-well microplate (manufactured by IWAKI), 200 μL of BCA solution (Reagent A:Reagent B = 50:1 mixture) and 5 μL of a sample solution (FT and W1 to W3) were dispensed, and the incubation was carried out at 37 ˚C for 2 hours. The measurement was performed with a microplate recorder (MPR A4i, manufactured by Tosoh Corporation), and the absorbance at the wavelength of 570 nm was measured. On this occasion, the protein solutions of known concentrations were prepared, and a calibration curve was prepared.

The amount of adsorbed protein on the particles was determined by subtracting the amount of non-adsorbed protein in the supernatants (FT and W1 to W3) from the amount of loaded protein.

The other method is the determination by the spectral measurement of the Soret absorption band.

Heme, which is a constituent of BHb, has a structure of the iron-porphyrin complex. In the absorption spectrum

of the porphyrin ring, the Soret absorption band is observed around 400 nm. By taking advantage of this property, the absorbance of the supernatants (FT and W1 to W3) obtained by centrifugation was measured at the wavelength of 405.5. On this occasion, the protein solutions of known concentrations were prepared, and a calibration curve was prepared.

Similarly to the BCA method, the amount of adsorbed protein on the particles was determined by subtracting the amount of non-adsorbed protein in the supernatants (FT and W1 to W3) from the amount of loaded protein.

A graph that displays the amount of adsorbed protein, which was determined from the above-described two measurements, with respect to time is shown in Fig. 4.

In addition, the amount of adsorbed BHb on the SVA-DC particle was compared between the sample in 500 ppm BHb solution and the sample in 1000 ppm BHb solution. The amount of adsorbed protein per particle (Fig. 5(A)) and the percentage of total adsorbed protein (Fig. 5(B)) when the loaded protein was set at 100 are shown in Fig. 5.

From Fig. 4, it is clear that the protein is adsorbed on the particle immediately after the start of the reaction. The adsorption reached equilibrium after 15 minutes of reaction time, and the adsorbed amount was nearly constant after that.

Accordingly, it was found that the protein adsorption takes place easily by allowing the monodisperse fine particles having the introduced iniferter group to act on a protein solution.

From Fig. 5(A), when the template molecule protein solution was 500 ppm and 1000 ppm, the adsorbed amounts were nearly the same. However, when the protein concentration was 500 ppm or 1000 ppm, the rate of adsorption with respect to the total amount of BHb was about 50% and 25%, respectively (Fig. 5(B)). The percentage, of the surface of one core particle, coated with BHb (rate of surface coating) was about 30% for both concentrations.

As seen from the results, there is an upper limit for the amount of particle-adsorbed protein. In this test example where BHb is adsorbed on the SVA-DC particle, the upper limit for the rate of surface coating is considered to be 30%. Because the amount of particle-adsorbed protein was the same for the protein concentration of 500 ppm and 1000 ppm, it is suggested that the adsorption to the upper limit is possible at a lower concentration.

Subsequently, a shell layer was introduced by the below-described method on the SVA-DC particle, where a template molecule (protein) has been adsorbed by the above-described method, and the state of the particle was analyzed.

<u>Introduction of a shell layer</u>

The SVA-DC particle having a photoiniferter group on the surface was used as the core particle. The preparation of the core-shell particle having an AAm shell layer on the surface was carried out by living radical polymerization with UV irradiation.

To the mixture of the SVA-DC (particle size in water: 360 nm) prepared by the above-described method, 2.0 g of acrylamide (AAm) and 0.04 g of acrylic acid (AAc) as the monomers, and 0.36 g of N,N'-methylene-bis-(acrylamide) (MBAAm) as the crosslinking agent, a solvent was added so that the total amount will be 200 g and placed in a reaction vessel. To the reaction vessel, a Liebig condenser was installed. Then, UV irradiation was carried out with a 400W high-pressure UV lamp at room temperature for 1 hour by stirring with a stir bar under a nitrogen atmosphere. After the UV irradiation, the reaction solution was centrifuged under the conditions of 13500 rpm, 35 minutes, and 15 ˚C. The purification was carried out, until the supernatant became clear, by repeating the centrifugation, decantation, and redispersion three times. Thus, the SVA-A particle having an AAm shell layer on the surface was obtained.

For Test Examples 1 to 3, which were conducted under the conditions shown in Table 1 for the amount of added SVA-DC (x), a kind of solvent, and the presence or absence of protein (BHb) adsorption on the SVA-DC particle, the particle diameter after the introduction of the shell layer was evaluated by dynamic light scattering and TEM. Thus, the increase in the particle size before and after the shell introduction was evaluated, respectively. The results are shown in Table 1. In addition, TEM images after the formation of a shell layer in the below-described Test Example 2 are shown in Fig. 6.

Table 1

| Test Example | Amount of added particle x (g) | Solvent | Presence or absence of BHb adsorption | $D_{DLS}$ (nm) | $D_{TEM}$ (nm) | Increase in particle size |
|---|---|---|---|---|---|---|
| 1 | 0. 5 | Water | × | 534. 1 | 362. 3 | ○ |
| 2 | 0. 3 | S P B | × | 718. 6 | 601. 8 | ○ |

(continued)

| Test Example | Amount of added particle x (g) | Solvent | Presence or absence of BHb adsorption | $D_{DLS}$ (nm) | $D_{TEM}$ (nm) | Increase in particle size |
|---|---|---|---|---|---|---|
| 3 | 0. 1 | S PB | ○ | 874. 2 | - | ○ |
| *SPB: 10mM SPB (pH7. 0) | | | | | | |

From the images in Fig. 6, it is clear that a core-shell type particle is formed. The black shade at the center is the core section, and the surrounding gray shade is the shell section. The thickness of polyacrylamide (PAAm) shell layer is about 150 nm, and the UV graft polymerization by the iniferter method progressed sufficiently.

As shown in Table 1, an increase in the particle size was observed in all test examples, and it was suggested that the introduction of the PAAm shell layer was achieved. In addition, there was a trend that the particle size of the obtained SVA-A particles increased with a decrease in the amount of added particles. The difference in the amount of added particles is namely the difference in the concentration of the polymerization initiation points in the reaction system. Therefore, it is considered that the lower the concentration of polymerization initiation points, the larger the amount of monomers taken into one initiation point; as a result, the particle size became larger.

In addition, when the solvent is either water or a phosphate buffer (SPB), the progress of polymerization was sufficiently observed. In the SVA-DC particles where the protein has been adsorbed, a significant increase in the particle size, namely, the formation of a shell layer with PAAm was observed.

Thus, the introduction of a shell layer on the core particle surface where a template molecule is adsorbed was confirmed to be possible by the UV graft polymerization by the iniferter method.

In addition, it was suggested that the thickness control of the above-described shell layer was possible by the adjustment of the amount of added core particles.

Subsequently, the template molecule (protein) was dissolved out from the SVA-A particles having the introduced shell layer, and the obtained molecular recognition material was evaluated.

Dissolution of protein

In the above-described example of shell introduction, a sample was prepared by using 0.5 g of SVA-DC, 0.5 g of AAm, 0.09 g of MBAAm, and 0.01 g of AAc, and adding SPB, as the solvent, to make the total amount to 200 g. This sample was used for the dissolution of protein from the shell layer.

The SVC-DC particles used here are those after the protein (BHb) adsorption reaction. Samples were collected with a constant volume delivery pump after 10 minutes and 20 minutes from the initiation of graft polymerization by the irradiation with a high-pressure UV lamp. The polymerization reaction was completed in 30 minutes. Thus, the core-shell (SVA-A) particles with the stated polymerization time were obtained. Each sample was purified by centrifugation according to the above-described method, and the below-described characterization was carried out.

The above-described each core-shell particle sample (2.5 mg (as solid)) was placed in a 2 mL microtube, and the dissolution of BHb adsorbed on the core particle surface was carried out. That is, 180 $\mu$L of 10% AcOH solution containing 10 wt% SDS (SDS:AcOHaq), as a solution for protein dissolution, was added to the above-described microtube, and the redispersion was carried out. Then, the centrifugation was carried out under the conditions of 13500 rpm, 10 minutes, and 5 °C, and 180 $\mu$L of the supernatant was removed. This operation was repeated three times (dissolution fractions: R1 to R3). The sample after protein dissolution was sufficiently washed with 10 mM SPB (pH 7.0), and the particles having imprinted voids (molecular recognition particles) were obtained.

<Characterization of core-shell particles>

The core-shell particles obtained above were characterized by the measurement with PCS (particle size in water by the dynamic light scattering method), TEM, and electrophoretic mobility. The measurements by PCS and TEM were carried out in the same way as above. Hereinafter, the measurement method of electrophoretic mobility will be explained.

With the use of a compact zeta potential measurement device (ZEECOM, manufactured by Microtec-Nition Co., Ltd., cell thickness: 0.76 nm, stationary layer: 0.15 nm, interelectrode distance: 9 cm), the electrophoretic mobility of each kind of particle was measured. Each kind of particle (SVA-DC particle and respective SVA-A particles by the polymerization time of 10 minutes, 20 minutes, and 30 minutes) dispersed in 1 mM KCl aqueous solution was filled in a cell, and the inside of the cell was maintained at a specified temperature with circulated water. Then, a voltage was applied and the mobility of floating particles on the stationary surface was measured. The electrophoretic mobility was calculated with the following equation. The measurement was carried out for 20 particles, respectively, and the average

value was used.

$$\mu = v * d/V$$

v: rate of movement, d: distance between electrodes, V: voltage

The measurement results for the electrophoretic mobility (EPM) and PCS are shown in Fig. 7. In addition, TEM images for the SVA-DC particles and the SVA-A particles by the polymerization time of 20 minutes are shown in Fig. 8.

In Fig. 7, no significant variation is observed in the sample particle size in water before and after polymerization. The measured values by the dynamic light scattering method include a standard deviation of about ±25 nm; thus it is considered to be difficult to accurately measure the particle size variation within this range. In the electrophoretic mobility, the mobility had a trend to increase to the negative direction with the progress of polymerization.

The core particle is prepared with the use of the anionic initiator KPS; therefore, the surface is negatively charged owing to KPS. The increase of the mobility to the negative direction with the progress of polymerization is considered to be because a trace of AAc is used as a monomer when the PAAm shell layer is introduced. AAc has a vinyl group and a carboxyl group in its structure, and the carboxyl group pH-dependently dissociates and has a negative charge. That is, the present measurement was carried out in 1 mM KCl; thus it is considered that the surface charge of the core-shell particle has become larger to the negative direction, with the introduction of the shell layer having AAc, compared with the core particle.

Thus, it was qualitatively confirmed by electrophoretic mobility that a shell layer was formed on the core particle having an adsorbed template molecule. In addition, the control of the shell layer thickness by the reaction time was suggested to be possible because the degree of polymerization was observed to change in proportion to the polymerization reaction time.

In addition, it was observed from Fig. 8 that the particle appearance clearly changed before and after polymerization. In the case of SVA-DC particles, the surfaces of the individual particles are clear. On the other hand, in the case of SVA-A particles in which the graft polymerization was carried out for 20 minutes, the contour of each particle is vague and there is a thin dim skin layer on the surface. This also suggests that a thin PAAm shell layer has been introduced on the surface of the core particle.

<Determination of the amount of dissolved-out protein>

The determination was carried out in the same way as the above-described spectral measurement of the Soret absorption band. However, the absorbance was measured at the wavelength of 395.0 nm for the supernatants (R1 to R3) obtained by centrifugation. On this occasion, BHb-SDS:AcOHaq, in which the stated protein (BHb) was dissolved in the dissolution solution, of known concentrations were prepared, and a calibration curve was prepared.

The amount of protein that dissolved out from the particle was obtained as the value calculated as the amount of protein in the supernatants (R1 to R3) by the above-described method. The amount of adsorbed BHb per SVA-A particle and the dissolved-out amount are shown in Fig. 9. Here, the adsorbed amount of each sample represents the amount of BHb that was originally adsorbed on the core (SVA-DC) particle surface, and the dissolved-out amount represents the amount of BHb dissolved out from the core-shell (SVA-A) particle obtained after graft polymerization reaction of the PAAm shell layer.

According to Fig. 9, BHb was almost completely dissolved out from the sample with a polymerization time of 10 minutes. On the other hand, about 70% of the adsorbed BHb was dissolved out from the samples with a polymerization time of 20 minutes and 30 minutes. Thus, it was inferred that the thickness of the introduced PAAm shell layer increases with an increase in the polymerization time and the amount of dissolved-out BHb from the core particle surface decreases with an increase in the polymerization time.

Thus, it was clarified that the dissolution of a sufficient amount of the template molecule is possible from the core-shell particle wherein the template molecule has been adsorbed on the surface and the shell layer has been introduced. In addition, it was suggested that the imprinted voids that correspond to the dissolved-out amount of the template molecule were formed on the particle surface.

<Capture of target molecules>

The capturing ability of the target protein was investigated for respective molecular recognition particles (MIP), which were obtained by the above-described protein dissolution process and polymerized with different polymerization times.

That is, 200 μL of BHb solution (500 ppm) was added to 2.5 mg of each kind of particle and the incubation

was carried out at 37 ˚C for 1 hour; thus the capture of BHb on the particle was attempted. The quantification of the particle-captured protein was carried out by a similar method to the above-described quantification of the dissolved-out protein.

For the control purpose, a similar test was carried out for each sample, with different polymerization times, of the core-shell (SVA-A) particle without the dissolution of the protein. The results are shown in Fig. 10.

In Fig. 10, each MIP corresponds to each sample in Fig. 9, and they are considered to have imprinted voids that correspond to the amount of dissolved-out BHb from the SVA-A particle. On the other hand, in the case of the control particle, BHb that is adsorbed on the core particle surface stays in the shell layer, and there are no imprinted voids. That is, the amount of adsorbed BHb in the control corresponds to the amount of irreversibly adsorbed BHb on the surface of the shell layer. It is considered that the same degree of adsorption of BHb also takes place on the surface of the MIP shell layer. Therefore, the recaptured amount by MIP is the value obtained by subtracting the adsorbed amount of BHb on the control particle from the total adsorbed amount of BHb on the MIP of each polymerization time. A significant value was obtained as the recaptured amount. This qualitatively supports that there are imprinted voids on the MIP surface and that the regioselective adsorption of BHb are taking place on the voids.

According to Fig. 10, the recapturing was observed for the MIP of any polymerization time. Thus, it was suggested that a fine particle having BHb-imprinted voids on the surface of the shell layer was obtained.

Example 2

Each test listed below was carried out for the production process, in the below-described MIP production example, and the produced molecular recognition particles (MIP).

<u>Production example of MIP</u>

(1) The SVA-DC particle (core particles) was obtained by introducing an N,N-diethyldithiocarbamate group as the iniferter group on the monodisperse St-VBC-AAm copolymer fine particle (SVA particle).
(2) To 40 mL of 500 ppm BHb solution, 0.5 g of the above-described SVA-DC was added, and the incubation was carried out under the conditions of pH 7.0 and 37 ˚C for 1 hour. Then, the particles were separated by centrifugation and washed to obtain SVA-DC particles in which BHb was adsorbed on the surface.
(3) Subsequently, to a mixture of 0.5 g of the above-described SVA-DC particles, 0.25 g of acrylamide (AAm), 0.045 g of N,N'-methylene-bis-(acrylamide) (MBAAm), and 0.005 g of acrylic acid (AAc), 10 mM SPB (phosphate buffer, pH 7.0) was added to make 200 g, in total, of mixed solution. To this mixed solution, UV was irradiated, and the polymerization reaction was carried out at room temperature for 1 hour. After the reaction, the centrifugation and washing were repeated to obtain SVA-A particles (core-shell particles) that have an AAm shell layer on the surface.
(3) To 10 wt% SDS : 10% AcOH solution (pH 2.8), the above-described SVA-A particles were added, the centrifugation was repeated at room temperature three times to dissolve out BHb adsorbed on the particles, and BHb-imprinted MIP was obtained as a solid.

<Adsorption of target molecules on the surface of core particle>

In process (2) of the above-described MIP production example, the amount of BHb adsorbed on the SVA-DC particle was determined. The actual amount of adsorbed BHb (adsorbed amount) with respect to the amount of BHb in 500 ppm BHb solution (input) is shown in Fig. 11.

As shown in Fig. 11, 43% of the BHb input was adsorbed on the SVA-DC particle and coated about 30% of the SVA-DC particle surface.

<Formation of a shell layer>

For the SVA-DC particles obtained in process (2), SVA-A particles obtained in process (3), and the control particles (BHb-non-adsorbed) obtained by process (3) without performing process (2) in the above-described MIP production example, the measurement of the particle size in water by DLS and the measurement of the electrophoretic mobility were carried out. The results are shown in Fig. 12.

As shown in Fig. 12, the particle size in water of SVA-DC particles was 342 nm, that of SVA-A particles was 350 nm, and that of the control particles was 352 nm; thus it is clear that a shell layer was formed in process (3) and the particle size increased. From the results of the electrophoretic mobility measurement, the shell layer containing acrylic acid was found to be formed on the SVA-DC particle surface.

<Removal of BHb>

In the above-described MIP production example, the amount of adsorbed BHb on the SVA-DC particle in process (2) and the amount of dissolved-out BHb from the SVA-A particle in process (3) were determined, respectively. The amount of BHb on the SVA-DC particle was determined, similarly to process (3), with the use of the dissolved-out BHb with a solution of 10 wt% SDS : 10% AcOH (pH: 2.8). The results are shown in Fig. 13.

From the results shown in Fig. 13, about 60% of BHb particles adsorbed on the core particle were removed in the process (3), and the imprinted voids were formed.

<Adsorption of target molecule>

MIP obtained in the above-described MIP production example and the control particles (imprinted void non-formed) obtained by process (3) without performing process (2) were tested. Each kind of particle (2.5 mg) was added to 200 μL of BHb solution (10 mM SPB (pH 7.0)) having different concentrations (0 to 500 ppm), and the reaction was carried out for 1 hour at 37 °C. The adsorption isotherms of BHb obtained from these results are shown in Fig. 14.

As shown in Fig. 14, the MIP having BHb-imprinted voids had, under the same concentration, about two times amount of adsorbed BHb compared with the control particles having no voids. In both particles, the amount of adsorbed BHb increased according to the concentration of BHb solution. However, when the adsorbed amount reached saturation, it became nearly constant. Thus, the more target molecules can be captured with the use of MIP.

<Recognition of target molecule>

The amount of adsorbed protein with the MIP obtained in the above-described production example was investigated for various proteins.

<u>Test method</u>

For each of bovine hemoglobin (BHb), myoglobin (Mb), bovine serum albumin (BSA), α-lactalbumin (α-LA), immunoglobulin G (IgG), and lysozyme (LZM)), 10 mM SPB (pH 7.0) containing 500 ppm of the above-described protein was prepared to obtain the adsorption system solvent. To 200 μL of the above-described adsorption system solvent, 2.5 mg of the MIP was added and the reaction was carried out for 1 hour at 37 °C. After the reaction, the amount of MIP-adsorbed protein was quantified for each sample. The results are shown in Fig. 15. In Fig. 14, the amount of imprinted voids represents the amount of dissolved-out protein from the core-shell particle of the above-described MIP preparation example, namely, the adsorption allowable amount of a target protein into the MIP imprinted voids.

As shown in Fig. 15, the BHb-imprinted MIP captured the protein BHb into the voids nearly to the adsorption allowable limit for the imprinted voids. However, the adsorption of IgG and LZM to the MIP was also observed. Because the surface charge of the MIP is negative and IgG and LZM are positively charged at pH 7.0, it was considered that the protein was adsorbed on the MIP surface by an electrostatic attractive force. In the adsorption of IgG and LZM, the hydrophobic interaction is also considered to be involved judging from their properties.

On the other hand, the protein Mb, which is neutral at pH 7.0, and the proteins such as BSA and α-LA, which are negatively charged at pH 7.0, hardly adsorbed on the negatively charged MIP. When we consider that BHb is also a protein that is neutral at pH 7.0, the imprinted sections are suggested to have a very high capturing force for a specific protein.

Accordingly, the molecular recognition material of the present invention, MIP, can recognize and capture the imprinted molecule.

In addition, with the use of the below-described adsorption system solvent (PBS), BHb and IgG were tested by a similar method to the above-described method. The results are shown in Fig. 16.

In Fig. 16, the amount of imprinted voids represents the amount of dissolved-out protein from the core-shell particle of the above-described MIP preparation example, namely, the adsorption allowable amount of a target protein into the MIP imprinted voids. The results of the above-described test are shown with "SPB", and the results of the present test in which the below-described adsorption system solvent was used are shown with "PBS".

<u>Preparation of adsorption system solvent</u>

The adsorption system solvent (PBS) was obtained by adding 150 mM NaCl to 10 mM SPB and adjusting the pH to 7.0.

As shown in Fig. 16, the amount of adsorbed IgG on MIP drastically decreased in the sample where the adsorption system solvent with added salt (PBS) was used compared with the sample where SPB was used as the

adsorption system solvent. On the other hand, the amount of captured BHb, which is the imprinted molecule, was good regardless of the presence or absence of salt in the adsorption system solvent.

The decrease in the amount of adsorbed IgG is considered to have taken place because the electrostatic attractive force between MIP and IgG was shielded owing to the action of the salt added to the adsorption system solvent.

Accordingly, in the application of the molecular recognition material of the present invention, the precision of recognition can be improved by the addition of salt to the adsorption system solvent.

Next, the adsorption behavior to MIP, in the two-component protein system containing the imprinted molecule, was investigated by the following test method.

<u>Test method</u>

The adsorption system solvent, namely, 10 mM SPB (pH 7.0) containing 500 ppm of a mixture of bovine hemoglobin (BHb) and a competing protein (competitor) (1:1 (w/w)) was prepared. To 200 μL of the above-described adsorption system solvent, 2.5 mg of MIP was added, and the reaction was carried out at 37 ˚C for 1 hour. After the reaction, MIP-adsorbed protein in each sample was quantified. The quantification of the protein was carried out by a similar method to the above-described quantification of the dissolved-out protein. The results of the tests in which bovine serum albumin (BSA), myoglobin (Mb), α-lactalbumin (α-LA), fibrinogen (FBG), immunoglobulin G (IgG), and lysozyme (LZM) were respectively used as the competitor, are shown in Fig. 17.

As shown in Fig. 17, MIP displayed an excellent capturing ability for the imprinted molecule regardless of the kinds of competing proteins present.

In addition, in the above-described two-component adsorption test, wherein BSA, FBG, or IgG was used as the competitor, the variation of the amount of adsorbed protein with respect to the reaction time was investigated.

The MIP adsorption test of BHb and each competitor was carried out by the above-described method, and only the reaction time was varied (0.5, 1, 4, 6, and 24 hours), respectively. The results are shown in Fig. 18.

As shown in Fig. 18, the adsorption of the imprinted molecule (BHb) reached saturation after the reaction of 1 to 4 hours. When the reaction time exceeded 4 hours, the adsorbed amount was nearly constant. This variation of the adsorbed amount was similar for all competitor-containing samples. Thus, it was inferred that the MIP reaction with the imprinted molecule was hardly affected by the adsorption behavior of competitors.

## Claims

**1.** A molecular recognition material, being a core-shell particle, having a shell layer on a core particle surface, wherein a template molecule is imprinted on the shell layer.

**2.** The molecular recognition material of claim 1 wherein the core particle is a monodisperse polymer fine particle.

**3.** The molecular recognition material of claim 1 or 2 wherein the template molecule is a protein.

**4.** A production method of the molecular recognition material of any of claims 1 to 3, comprising:

(a) introducing an iniferter group on the core particle surface,
(b) adsorbing the template molecule, after process (a), onto the core particle surface, and
(c) forming the shell layer, after process (b), on the core particle surface.

**5.** The production method of claim 4, further comprising:

(d) dissolving the template molecule, after process (c), from the core-shell particle.

FIG.1

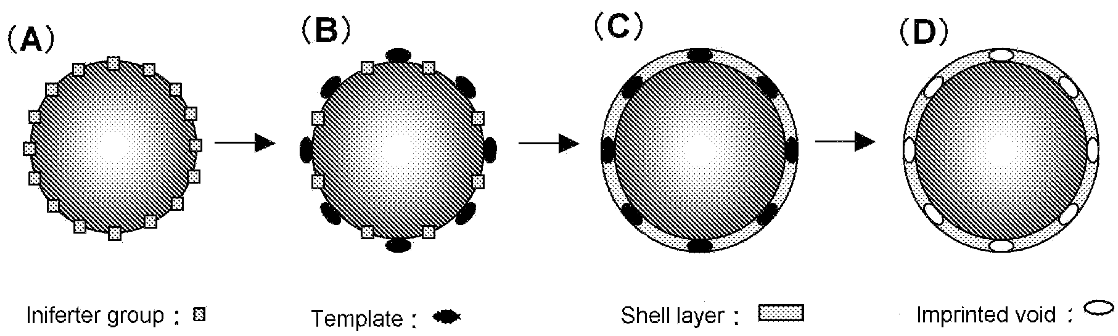

FIG.2

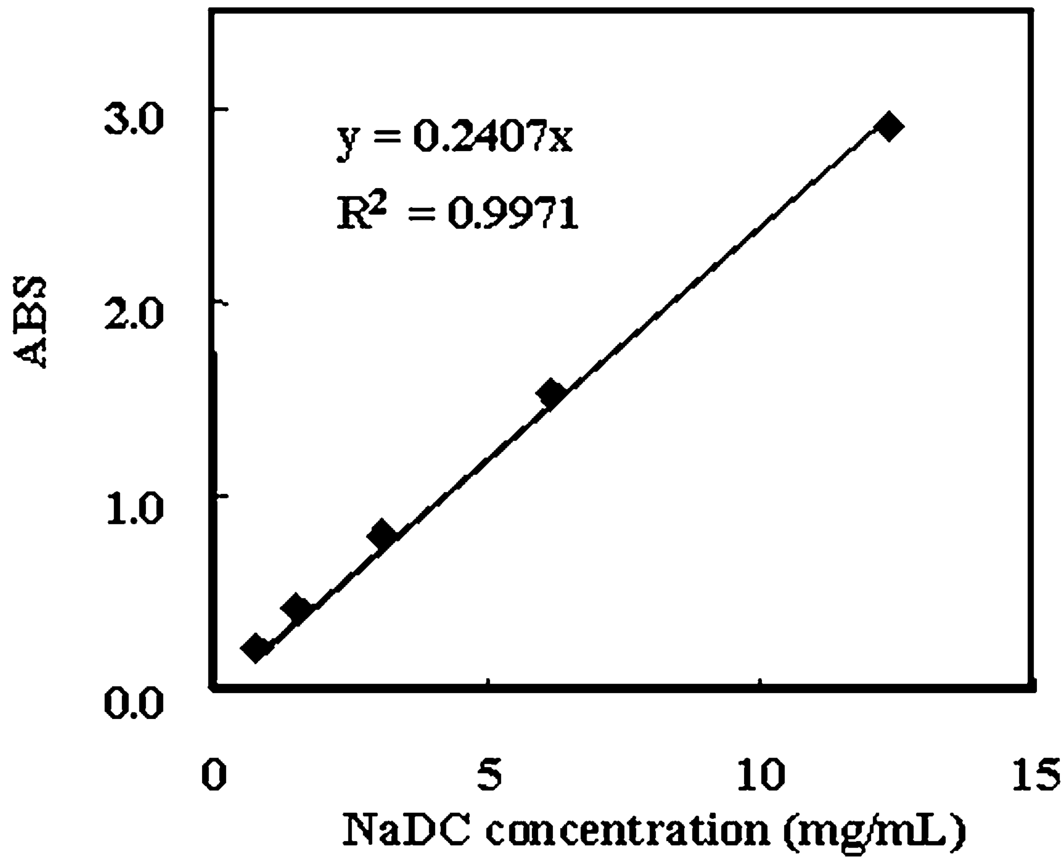
y = 0.2407x
R2 = 0.9971
ABS
3.0
2.0
1.0
0.0
0
5
10
15
NaDC concentration (mg/mL)

FIG.3

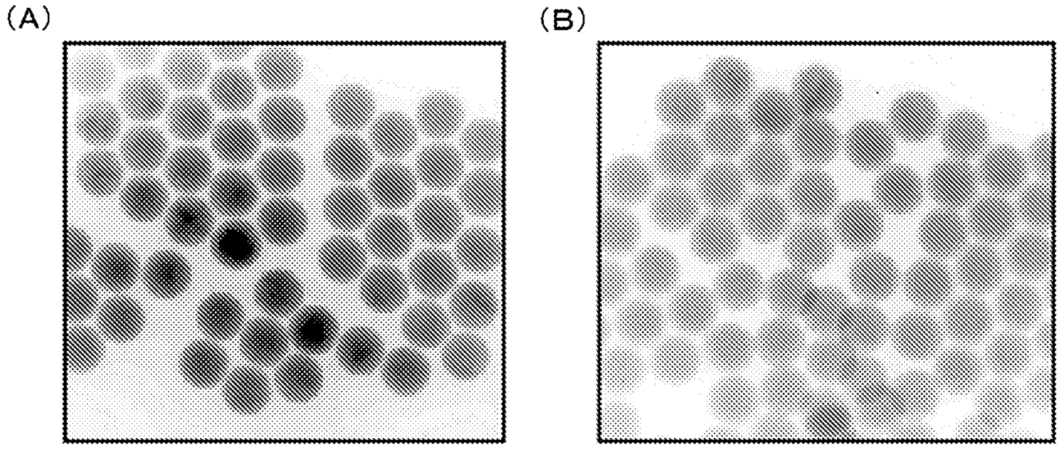
(A)
(B)

FIG.4

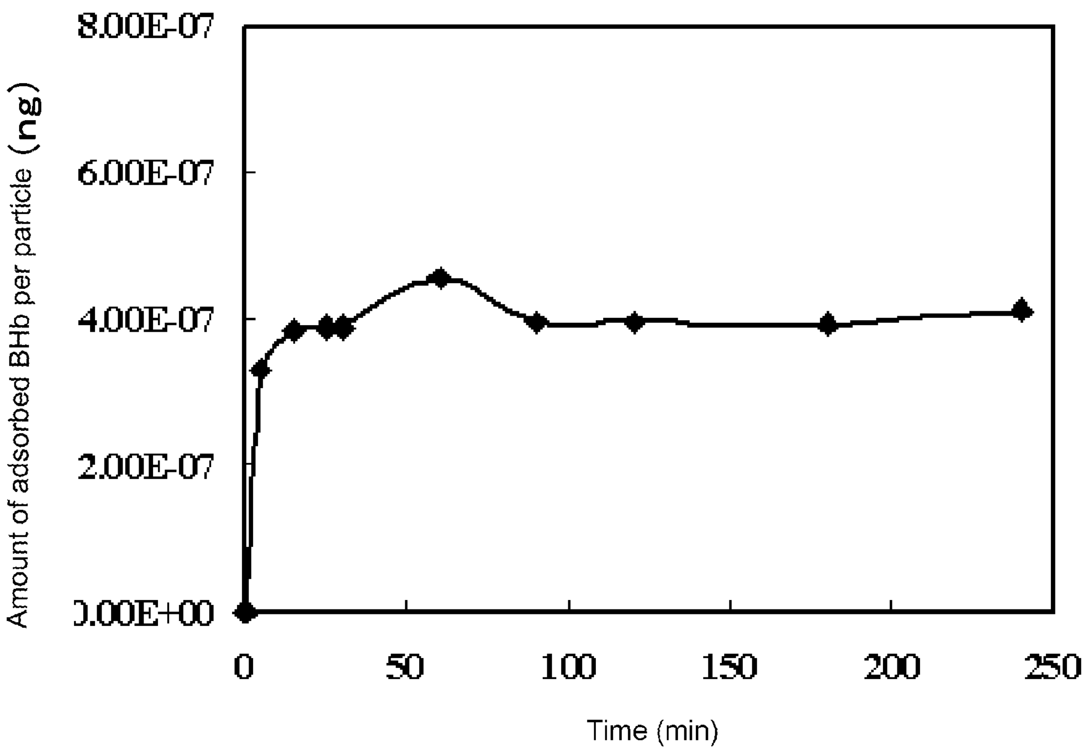
8.00E-07
6.00E-07
4.00E-07
2.00E-07
0.00E+00
Amount of adsorbed BHb per particle (ng)
0
50
100
150
200
250
Time (min)

FIG.5

(A)

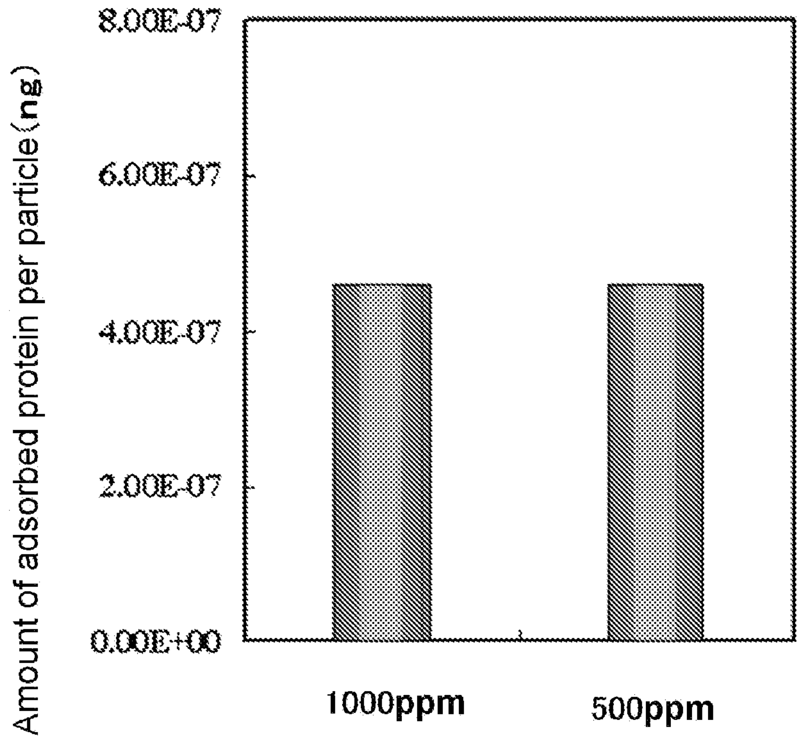
8.00E-07
6.00E-07
4.00E-07
2.00E-07
0.00E+00
Amount of adsorbed protein per particle (ng)
1000ppm
500ppm

(B)

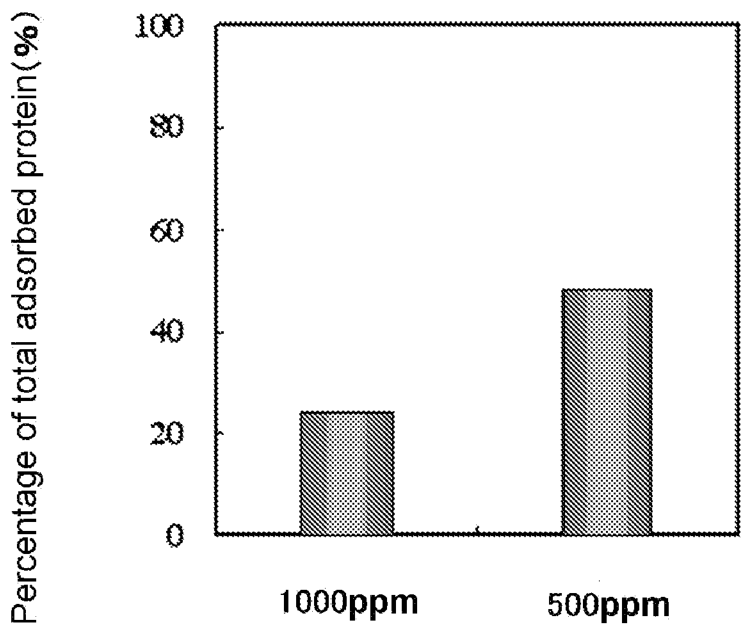
100
80
60
40
20
0
Percentage of total adsorbed protein (%)
1000ppm
500ppm

FIG.6

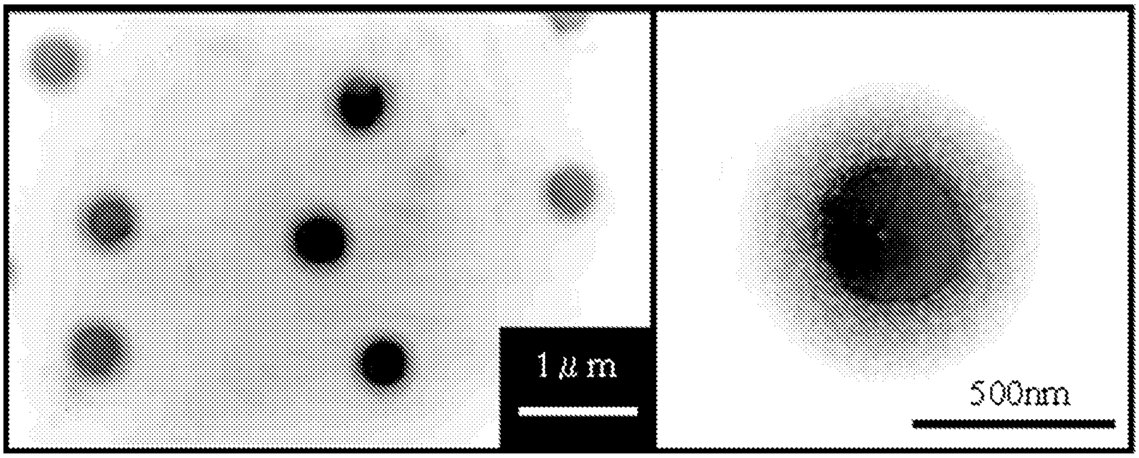
1 μm
500nm

FIG.7

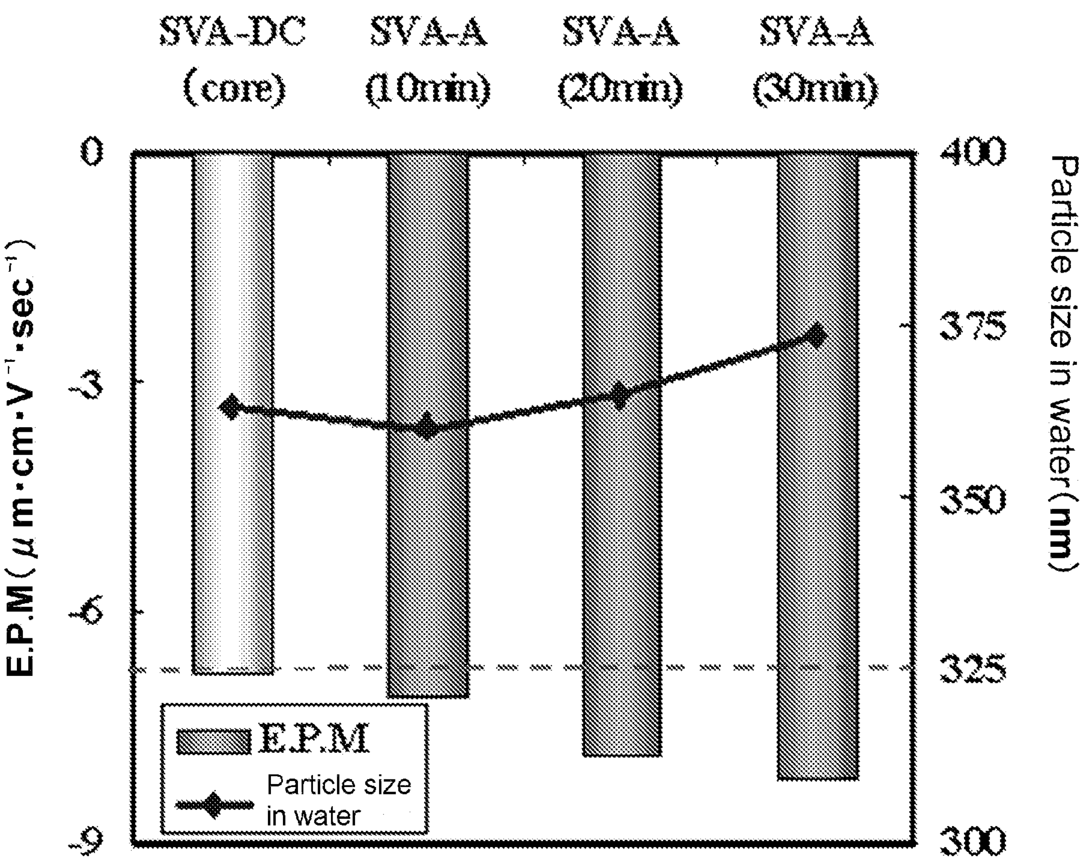
SVA-DC (core)
SVA-A (10min)
SVA-A (20min)
SVA-A (30min)
0
-3
-6
-9
400
375
350
325
300
E.P.M (μm·cm·V⁻¹·sec⁻¹)
Particle size in water (nm)
E.P.M
Particle size in water

FIG.8

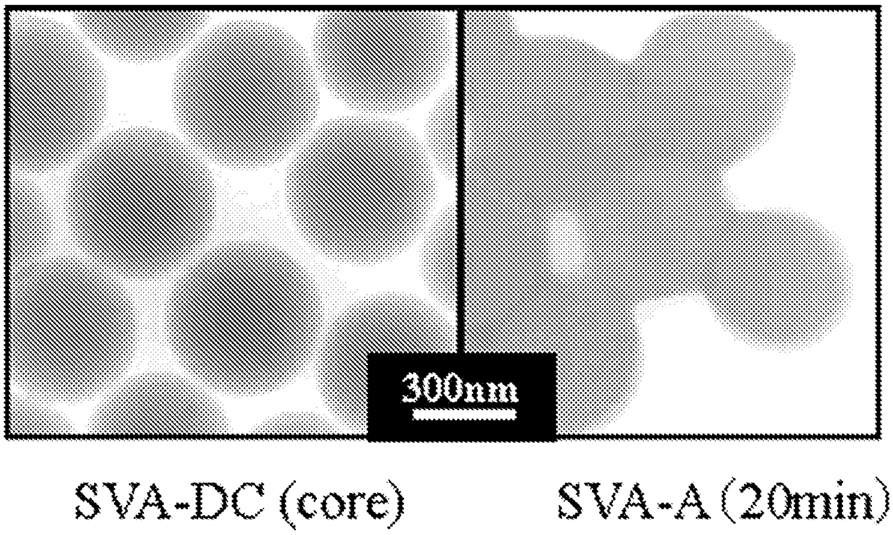
300nm
SVA-DC (core)
SVA-A (20min)

FIG.9

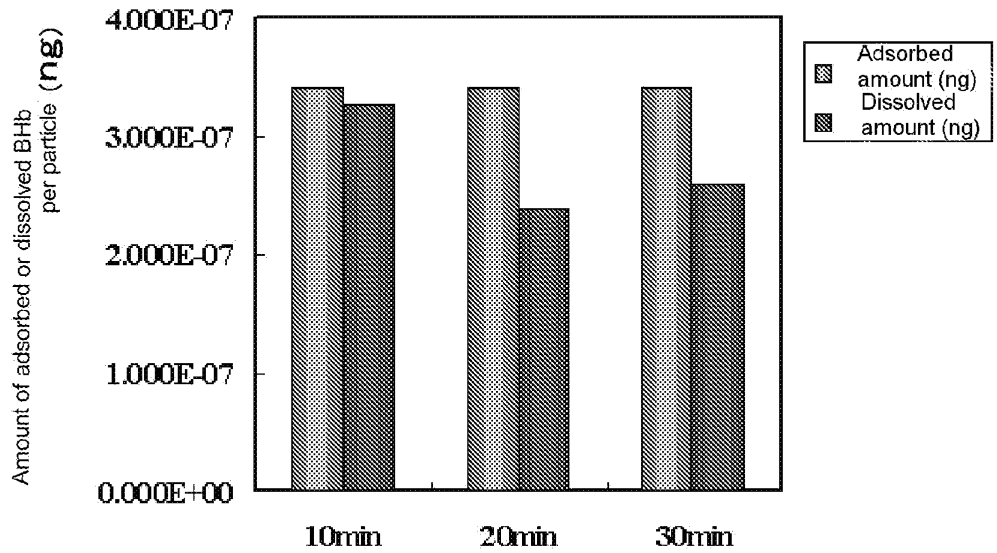
4.000E-07
3.000E-07
2.000E-07
1.000E-07
0.000E+00
Amount of adsorbed or dissolved BHb per particle (ng)
Adsorbed amount (ng)
Dissolved amount (ng)
10min
20min
30min

FIG.10

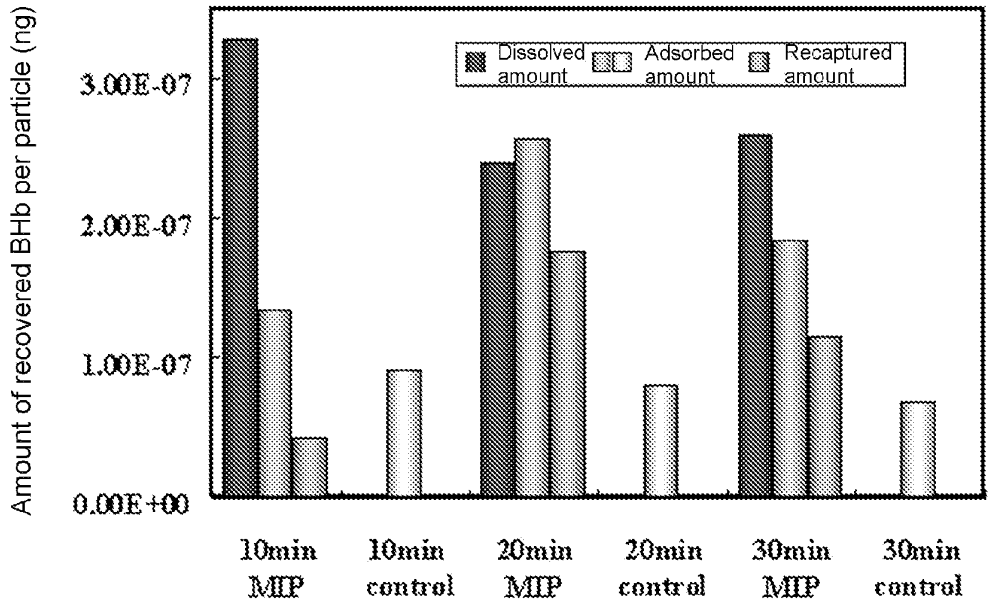
Amount of recovered BHb per particle (ng)
3.00E-07
2.00E-07
1.00E-07
0.00E+00
Dissolved amount
Adsorbed amount
Recaptured amount
10min MIP
10min control
20min MIP
20min control
30min MIP
30min control

FIG.11

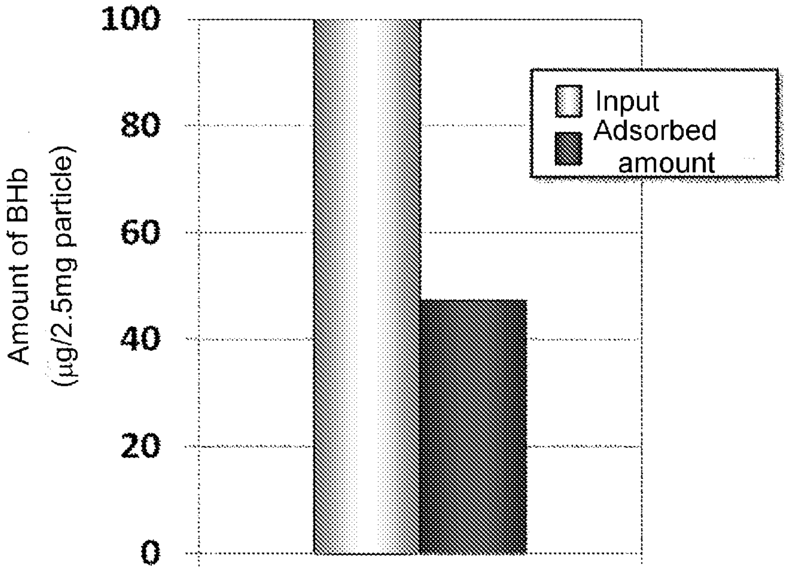
Amount of BHb (µg/2.5mg particle)
100
80
60
40
20
0
Input
Adsorbed amount

FIG.12

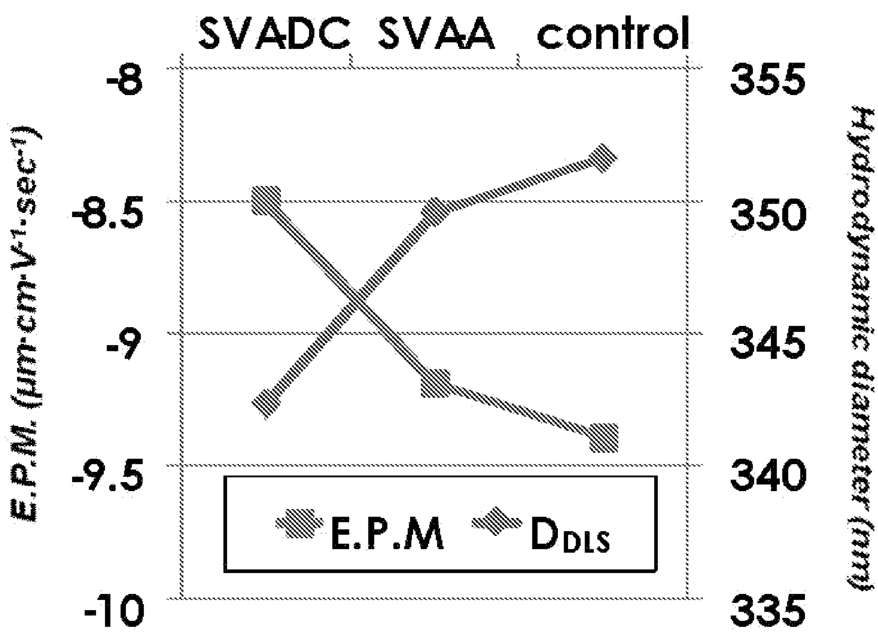
SVADC
SVAA
control
-8
-8.5
-9
-9.5
-10
355
350
345
340
335
E.P.M. (μm·cm·V-1·sec-1)
Hydrodynamic diameter (nm)
E.P.M
DDLS

FIG.13

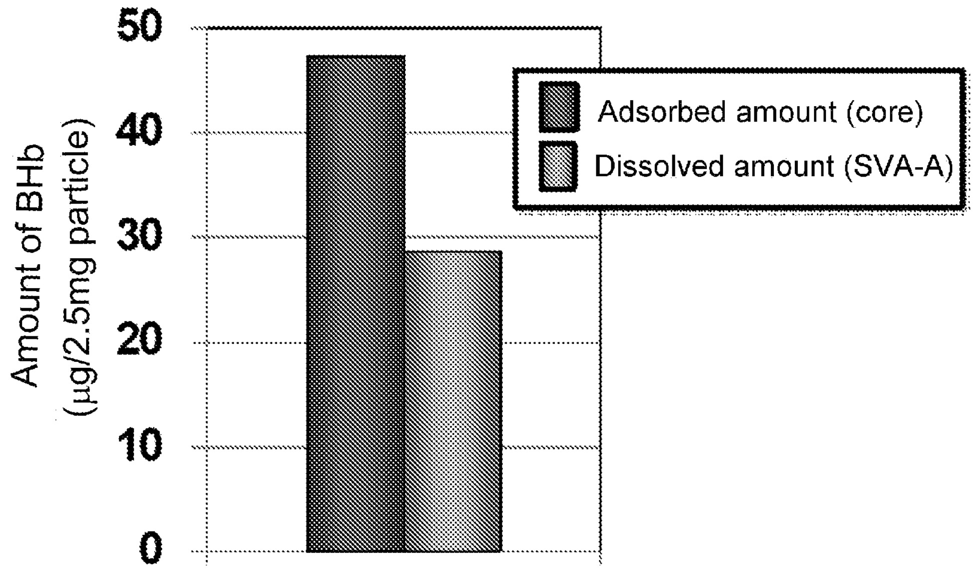
50
40
30
20
10
0
Amount of BHb (μg/2.5mg particle)
Adsorbed amount (core)
Dissolved amount (SVA-A)

FIG.14

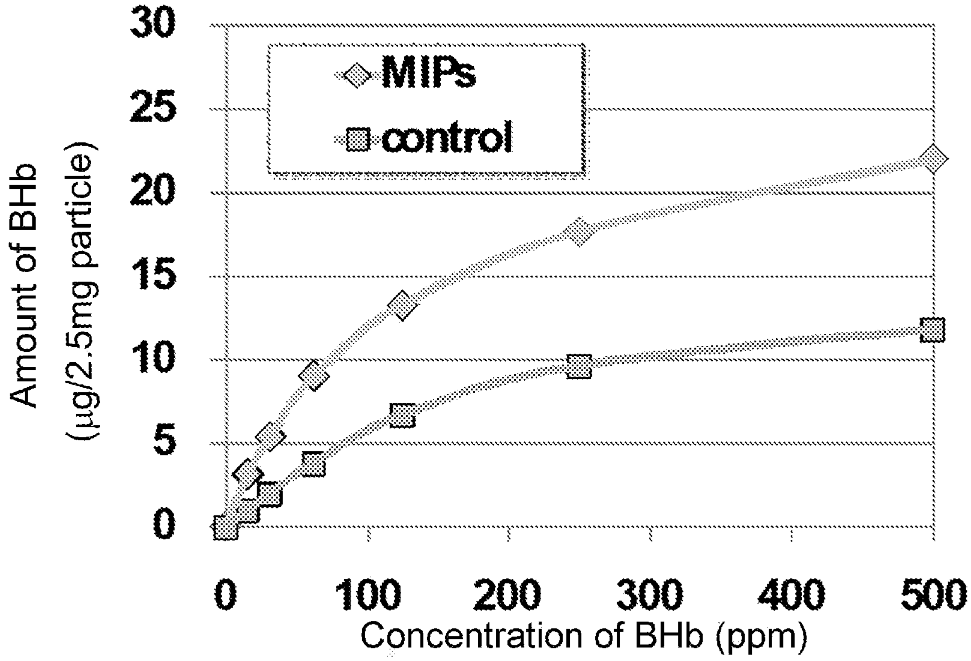
30
25
20
15
10
5
0
MIPs
control
Amount of BHb
(μg/2.5mg particle)
0
100
200
300
400
500
Concentration of BHb (ppm)

FIG.15

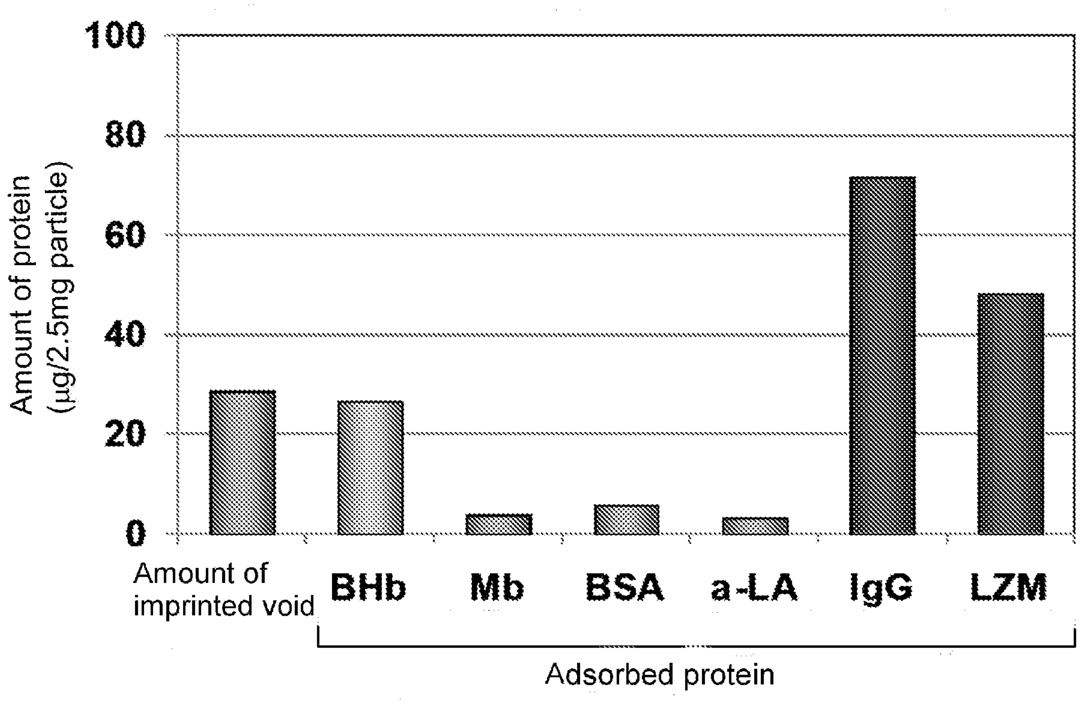
100
80
60
40
20
0
Amount of protein
(μg/2.5mg particle)
Amount of imprinted void
BHb
Mb
BSA
a-LA
IgG
LZM
Adsorbed protein

FIG.16

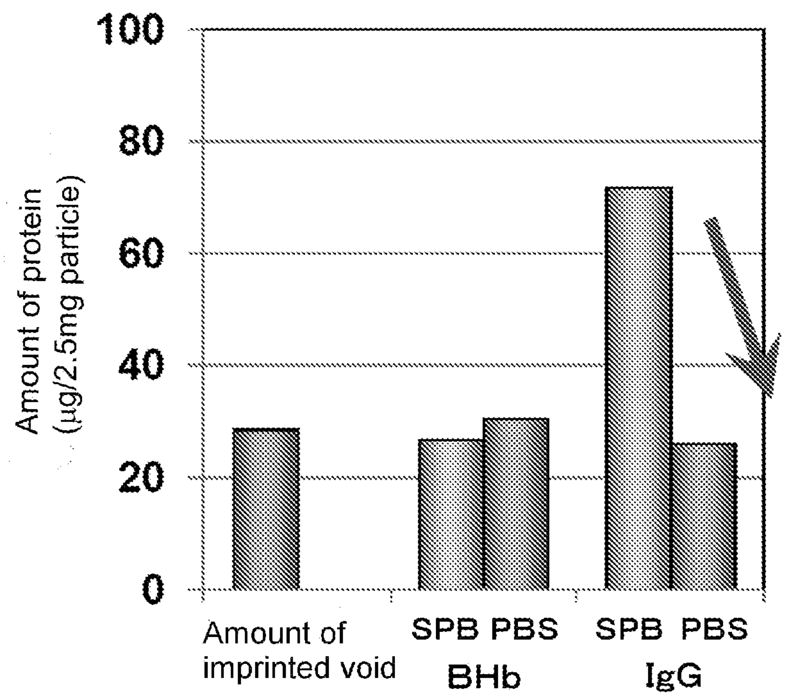
100
80
60
40
20
0
Amount of protein (μg/2.5mg particle)
Amount of imprinted void
SPB PBS
BHb
SPB PBS
IgG

FIG.17

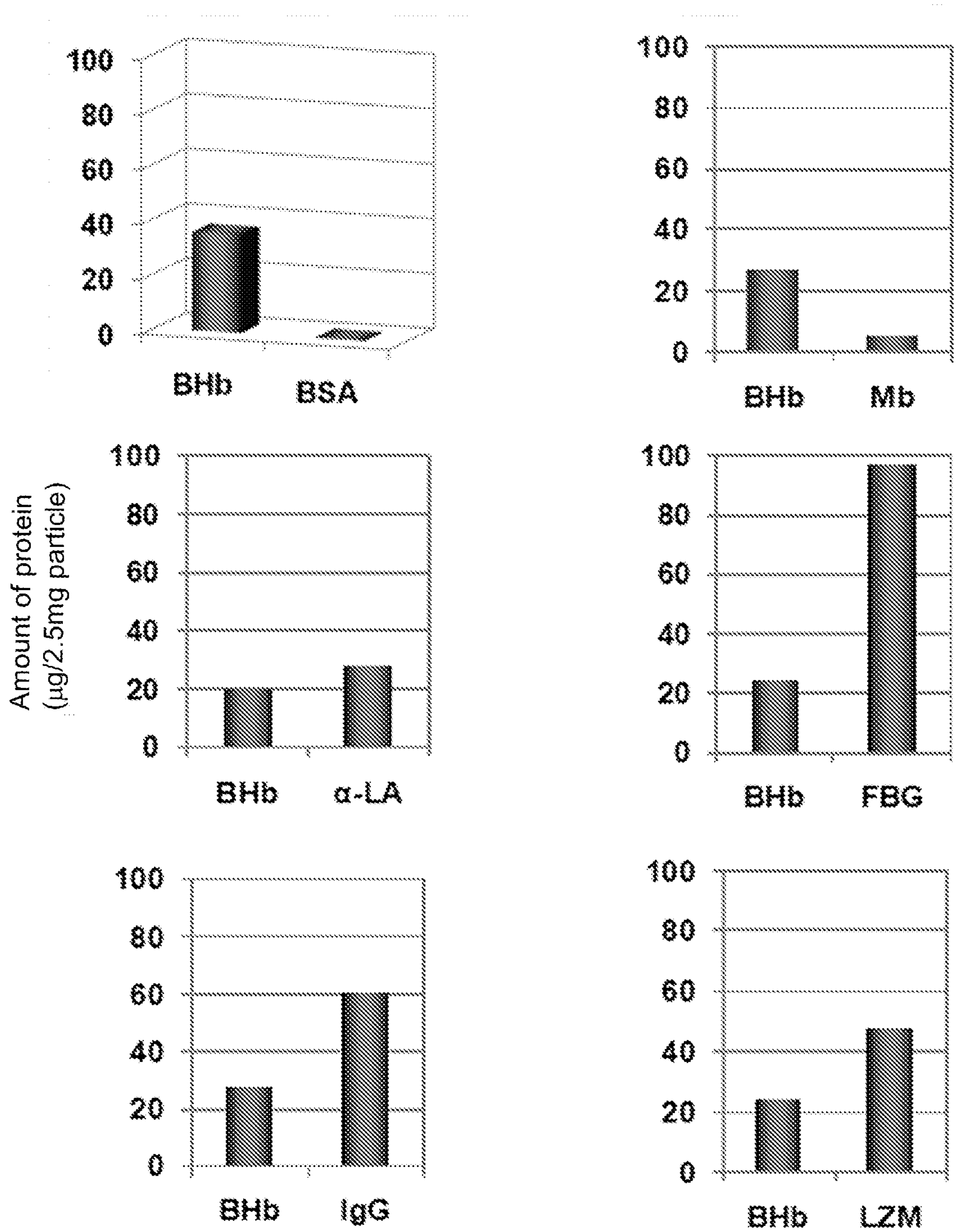

Amount of protein (μg/2.5mg particle)
100
80
60
40
20
0
BHb
BSA
Mb
α-LA
FBG
IgG
LZM

FIG.18

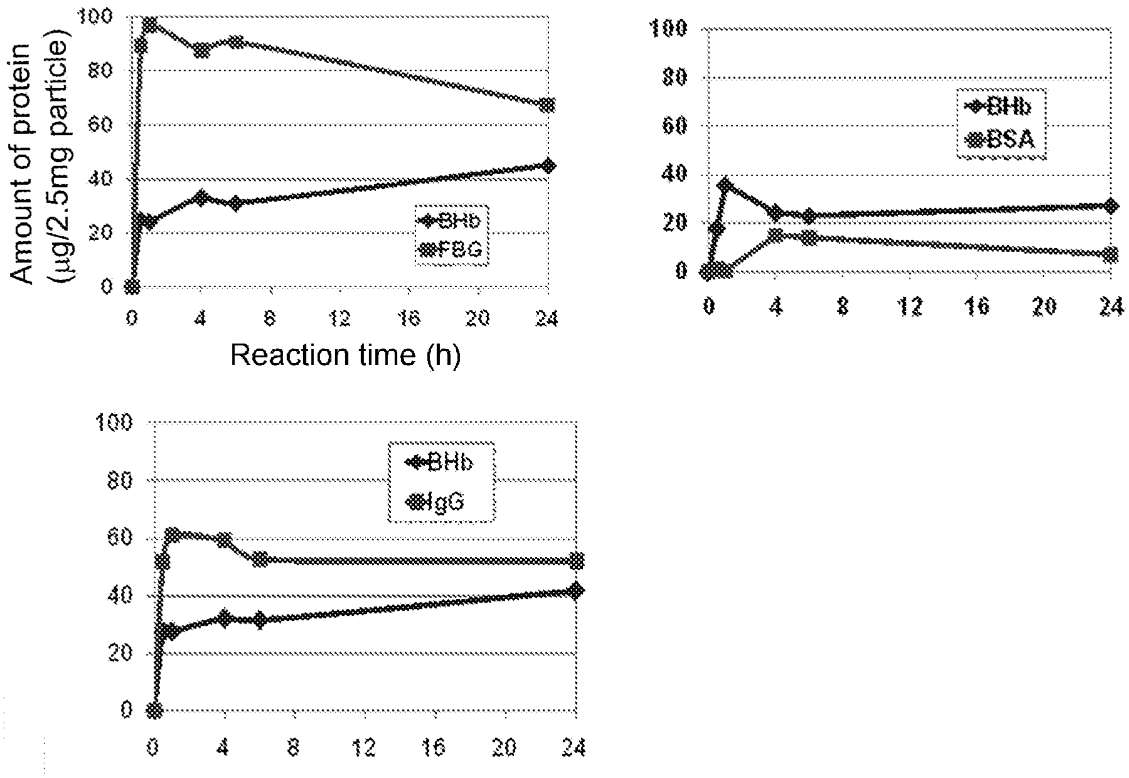
Amount of protein
(μg/2.5mg particle)
100
80
60
40
20
0
0
4
8
12
16
20
24
Reaction time (h)
BHb
FBG
BHb
BSA
BHb
IgG

**INTERNATIONAL SEARCH REPORT**

International application No.
PCT/JP2008/065526

A. CLASSIFICATION OF SUBJECT MATTER
*B01J20/26*(2006.01)i, *B01J13/02*(2006.01)i, *B01J13/04*(2006.01)i, *B82B1/00*(2006.01)i, *B82B3/00*(2006.01)i, *C07K17/02*(2006.01)i, *C08F291/00*(2006.01)i, *G01N30/88*(2006.01)i, *B01D15/08*(2006.01)n

According to International Patent Classification (IPC) or to both national classification and IPC

B. FIELDS SEARCHED

Minimum documentation searched (classification system followed by classification symbols)
B01J20/26, B01J13/02, B01J13/04, B82B1/00, B82B3/00, C07K17/02, C08F291/00, G01N30/88, B01D15/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-509550 A (MIP TECHNOLOGIES AB.), 11 March, 2003 (11.03.03), Claims; Par. Nos. [0010] to [0012], [0019], [0020]; each examples & WO 2001/019886 A1 & US 6759488 B1 & EP 1226196 A1 | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 September, 2008 (29.09.08) | 07 October, 2008 (07.10.08) |
| Name and mailing address of the ISA/ Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• JP 2007224772 A

### Non-patent literature cited in the description

• **Derek et al.** *Anal. Chim. Acta,* 2005, vol. 542, 61-65
• **Wang et al.** *Anal. Chem.,* 2006, vol. 78, 317-320